(19) Europäisches Patentamt
European Patent Office
Office européen des brevets

(11) **EP 2 279 488 B1**

(12) **FASCICULE DE BREVET EUROPEEN**

(45) Date de publication et mention
de la délivrance du brevet:
**13.11.2013 Bulletin 2013/46**

(21) Numéro de dépôt: **09729906.9**

(22) Date de dépôt: **25.03.2009**

(51) Int Cl.:
*G06T 7/00* (2006.01)      *G02B 21/22* (2006.01)
*G01N 15/14* (2006.01)      *G01B 11/00* (2006.01)

(86) Numéro de dépôt international:
**PCT/FR2009/050512**

(87) Numéro de publication internationale:
**WO 2009/125131 (15.10.2009 Gazette 2009/42)**

(54) **PROCÉDÉ DE DÉTERMINATION D'UNE REPRÉSENTATION TRIDIMENSIONNELLE D'UN OBJET À PARTIR DE POINTS, PROGRAMME D'ORDINATEUR ET SYSTÈME D'IMAGERIE CORRESPONDANT**

VERFAHREN ZUR BESTIMMUNG EINER DREIDIMENSIONALEN DARSTELLUNG EINES OBJEKTS UNTER VERWENDUNG VON PUNKTEN UND ENTSPRECHENDES COMPUTERPROGRAMM UND ABBILDUNGSSYSTEM

METHOD FOR DETERMINING A THREE-DIMENSIONAL REPRESENTATION OF AN OBJECT USING POINTS, AND CORRESPONDING COMPUTER PROGRAM AND IMAGING SYSTEM

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **27.03.2008 FR 0851985**

(43) Date de publication de la demande:
**02.02.2011 Bulletin 2011/05**

(73) Titulaire: **Université Paris 13**
**93430 Villetaneuse (FR)**

(72) Inventeur: **WANG, Jiaping**
**F-92160 Antony (FR)**

(74) Mandataire: **Blot, Philippe Robert Emile**
**Cabinet Lavoix**
**2, place d'Estienne d'Orves**
**75441 Paris Cedex 09 (FR)**

(56) Documents cités:
**EP-A- 1 413 911**

• **YONG YU ET AL: "A Bayesian 3D Volume Reconstruction for Confocal Micro-rotation Cell Imaging" MEDICAL IMAGE COMPUTING AND COMPUTER-ASSISTED INTERVENTION Â MICCAI 2007; [LECTURE NOTES IN COMPUTER SCIENCE], SPRINGER BERLIN HEIDELBERG, BERLIN, HEIDELBERG, vol. 4792, 29 octobre 2007 (2007-10-29), pages 685-692, XP019081865 ISBN: 978-3-540-75758-0**

## Description

La présente invention concerne un procédé de détermination d'une représentation tridimensionnelle d'un objet.

L'invention s'applique en particulier pour la reconstruction de micro objets dans les systèmes d'imagerie microscopique.

Le document de l'état de la technique EP 1 413 911 A1 décrit un procédé de détermination d'une représentation tridimensionnelle d'un objet à partir d'une séquence d'images en coupe de l'objet dans un plan de coupe, chaque image en coupe ayant été prise à un instant de prise de vue respectif pendant que l'objet se déplaçait par rapport au plan de coupe.

Dans ce document de l'état de la technique, l'objet est une cellule de dimension de l'ordre de quelques micromètres. La cellule est marquée avec un composé fluorescent et est placée dans un réceptacle d'un système d'imagerie microscopique. Un champ d'enfermement est crée dans le réceptacle afin de contrôler la position de la cellule, sans que cette dernière ne soit écrasée. Le système d'imagerie microscopique comprend en outre un microscope optique ayant un plan focal formant le plan de coupe. Afin d'obtenir la séquence d'images en coupe, la cellule est mise en rotation à une vitesse angulaire constante autour d'un axe du plan focal, et des images en coupe sont prises à une vitesse entre 1 et 1000 acquisitions par seconde.

Le document de l'état de la technique propose en outre de déterminer la représentation tridimensionnelle de la cellule à partir des techniques de reconstruction usuelles utilisées en tomographie. Ces techniques usuelles consistent à déterminer la représentation tridimensionnelle d'un objet à partir d'images en coupe et des positions de l'objet par rapport au plan de coupe, les positions de l'objet par rapport au plan de coupe étant déterminées par la connaissance des réglages de la machine de radiographie et/ou de capteurs physiques permettant de connaître la position de la machine de radiographie. On connait par ailleurs du document « A Bayesian 3D volume reconstruction for confocal micro-rotation cell imaging » (Yu Y. et al., Medical image computing and computer-assisted intervention - MICCAI 2007) un procédé de détermination d'une représentation tridimensionnelle d'un objet, selon lequel les transformations (rotations et/ou translations) subies par l'objet et sa représentation tridimensionnelle sont déterminées par minimisation d'une fonction de coût, en fonction de valeurs en différents points de chaque image en coupe. Cependant, ce procédé ne permet pas de prendre en compte d'éventuelles erreurs de mesure, pouvant se produire entre la valeur réelle d'un point de l'objet et la valeur obtenue sur l'image en coupe.

L'invention a pour but de fournir un procédé de reconstruction permettant la détermination rapide d'une représentation tridimensionnelle tout en ayant une bonne résolution.

Ainsi, l'invention a pour objet un procédé de détermination d'une représentation tridimensionnelle d'un objet, caractérisé par la revendication 1.

Selon d'autres caractéristiques de l'invention :

- la fonction de représentation tridimensionnelle comprend une décomposition en fonctions de base autour de noeuds, afin d'obtenir une somme de termes, chaque terme comprenant la fonction de base avec une variable dépendant d'un noeud respectif associé à ce terme,
- la fonction de base comprend un produit de fonctions B-spline dans chacune des trois directions de l'espace,
- le volume comprend une pluralité de sous volumes ; les paramètres étant répartis en groupe de paramètres, la fonction de représentation tridimensionnelle est choisie de sorte que chaque groupe de paramètres est associé à un sous volume respectif ; la détermination des paramètres comprend, successivement pour chaque sous volume, la détermination des paramètres associés à ce sous volume, tels que, pour chaque point du sous volume, et, de préférence également des sous volumes directement contiguës au sous volume, l'estimation de la valeur du point donne sensiblement la valeur du point, les paramètres associés aux autres sous volumes étant fixés à une valeur donnée,
- la valeur de chaque point de l'ensemble est obtenue à partir d'une image en coupe de l'objet, respective associée au point ; l'opération donne une fonction d'estimation de la valeur de chaque point de l'ensemble, à partir de la fonction de représentation tridimensionnelle et d'une fonction d'étalement du point, la fonction d'étalement du point dépendant d'une rotation entre la position de l'objet à l'instant de prise de l'image en coupe respective associée au point, et la position de l'objet à l'instant donné ; la fonction de représentation tridimensionnelle est choisie telle que, pour chaque point de volume :

$$Op(\phi, f_R)(u) = Op(\phi, f)(Ru),$$

avec $Op$ l'opération, $\phi$ la fonction de base, $R$ une rotation quelconque, $f_R$ la fonction d'étalement du point pour la rotation $R$, $f_R(u) = f(Ru)$, $f$ la fonction d'étalement du point sans rotation, et $Ru$ le point résultant de la rotation du point *u* par la rotation *R* ,

- l'opération est une convolution de la fonction de représentation tridimensionnelle avec la fonction d'étalement du point,
- la fonction de base st une fonction radiale de base, chaque terme dépendant de la distance de chaque point avec le noeud associé à ce terme, mais étant indépendante de la direction entre le point et le noeud,
- la détermination de l'ensemble de points et d'une valeur de chaque point, est réalisée à partir de plusieurs séquences d'images en coupe, et le porécédé comprend : la détermination d'une fonction de représentation tridimensionnelle, sur un sous volume respectif, pour chaque séquence, chaque représentation tridimensionnelle donnant une représentation de l'objet dans une position respective ; la détermination, pour chaque séquence, d'une rotation et d'une translation permettant de sensiblement placer toutes les positions des représentations de l'objet dans une position de référence,
- la détermination, pour chaque séquence, de la rotation et de la translation comprend : la sélection, dans chaque sous ensemble, d'au moins trois groupes, de préférence quatre ou plus, de points du sous ensemble, selon un critère de sélection, qui est le même pour toutes les séquences d'images en coupe ; la détermination de la rotation et de la translation de chaque séquence d'images en coupe à partir des groupes de points,
- la détermination de la rotation et de la translation de chaque séquence d'images en coupe à partir des groupes de points comprend : le calcul, pour chaque séquence d'images en coupe, d'un barycentre de chacun des groupes de points ; la détermination de la rotation et de la translation de chaque séquence à partir des barycentres,
- le procédé comprend : la détermination d'un intervalle d'acquisition de chaque image en coupe ; la détermination d'un mouvement continu de l'objet pendant l'intervalle d'acquisition de chaque image en coupe ; la prise en compte du mouvement continu de l'objet pendant l'intervalle d'acquisition pour déterminer la représentation tridimensionnelle de l'objet,
- le mouvement de l'objet par rapport au plan de coupe comporte un mouvement de rotation autour d'un axe fixe et avec une vitesse angulaire fixe et une suite de translations de perturbation, chacune subit par l'objet entre deux images en coupe respectives successives ; le mouvement continu comprend la rotation autour de l'axe fixe et avec la vitesse angulaire fixe pendant le temps d'acquisition de chaque image en coupe, et une fraction linéaire de la translation de perturbation subit par l'objet entre l'image en coupe et la suivante.

L'invention a également pour objet un produit programme d'ordinateur qui, lorsque mis en oeuvre sur un ordinateur, met en oeuvre un procédé l'invention.

L'invention a également pour objet un système d'imagerie caractérisé en ce qu'il comprend : des moyens permettant d'obtenir des images dans un plan focal, un réceptacle pour recevoir un objet, des moyens pour mettre l'objet en mouvement, des moyens pour recevoir des images en coupe prises dans le plan focal, adaptés pour mettre en oeuvre un procédé selon l'invention.

Ces caractéristiques, ainsi que d'autres, apparaîtront à la lecture de la description qui va suivre de modes de réalisation préférés de l'invention. Cette description est faite en référence aux dessins annexés, parmi lesquels :

- la figure 1 représente un système d'imagerie selon l'invention,
- la figure 2 représente les étapes d'un procédé selon l'invention d'analyse d'un objet,
- la figure 3 représente les étapes d'un procédé, mis en oeuvre dans le procédé d'analyse de la figure 2, de traitement d'images en coupe de l'objet,
- la figure 4 représente les étapes de détermination de paramètres du mouvement de l'objet par rapport à un plan de coupe,
- la figure 5 représente les étapes de détermination, selon une première variante, d'un axe de rotation de l'objet et d'une suite de translations de perturbation que l'objet subit,
- la figure 6 illustre la projection orthogonale d'une image en coupe sur un plan support d'une image spatialement voisine,
- la figure 7 représente les étapes de détermination, selon une seconde variante, d'un axe de rotation de l'objet et d'une suite de translations de perturbation que l'objet subit,
- la figure 8 représente les étapes de détermination, selon une troisième variante, d'un axe de rotation de l'objet et d'une suite de translations de perturbation que l'objet subit,
- la figure 9 illustre un cercle coupant le plan de coupe, que décrit un point de l'objet autour de l'axe de rotation,
- la figure 10 représente les étapes du début d'une détermination d'une représentation tridimensionnelle de l'objet,
- la figure 11 représente les étapes de la fin, suivant une première variante, de la détermination d'une représentation tridimensionnelle de l'objet,
- la figure 12 représente les étapes de la fin, suivant une seconde variante, de la détermination d'une représentation tridimensionnelle de l'objet,
- la figure 13 représente les étapes d'une variante de détermination d'un ensemble de points, pour la détermination de la représentation tridimensionnelle de l'objet de la figure 10,

- la figure 14 représente les étapes d'une variante de sélection de groupes de points, réalisée dans la détermination de l'ensemble de points de la figure 13,
- la figure 15 représente les étapes, suivant une troisième variante, de détermination d'une représentation tridimensionnelle de l'objet, et
- la figure 16 représente les étapes d'un réglage du système d'imagerie de la figure 1.

La description qui va suivre concerne la détermination d'une représentation tridimensionnelle d'une cellule vivante. Cependant, l'homme du métier n'aura aucun mal à transposer cette description à d'autres types d'objets, vivants ou inertes.

Par ailleurs, les relations mathématiques indiquées par la suite sont exprimées dans un repère fixe XYZ, attaché au plan de coupe $P$ (qui sera décrit plus loin) et dont le plan XY est confondu avec ce plan de coupe $P$.

En outre, dans la présente description, le terme « valeur » ne signifie pas uniquement une valeur de nombre, mais peut également être une valeur de vecteur (c'est-à-dire un vecteur particulier) ou une valeur de ligne (c'est-à-dire une ligne particulière), etc., suivant la nature de l'objet mathématique dont la valeur est considérée.

## DESCRIPTION DU SYSTEME D'IMAGERIE

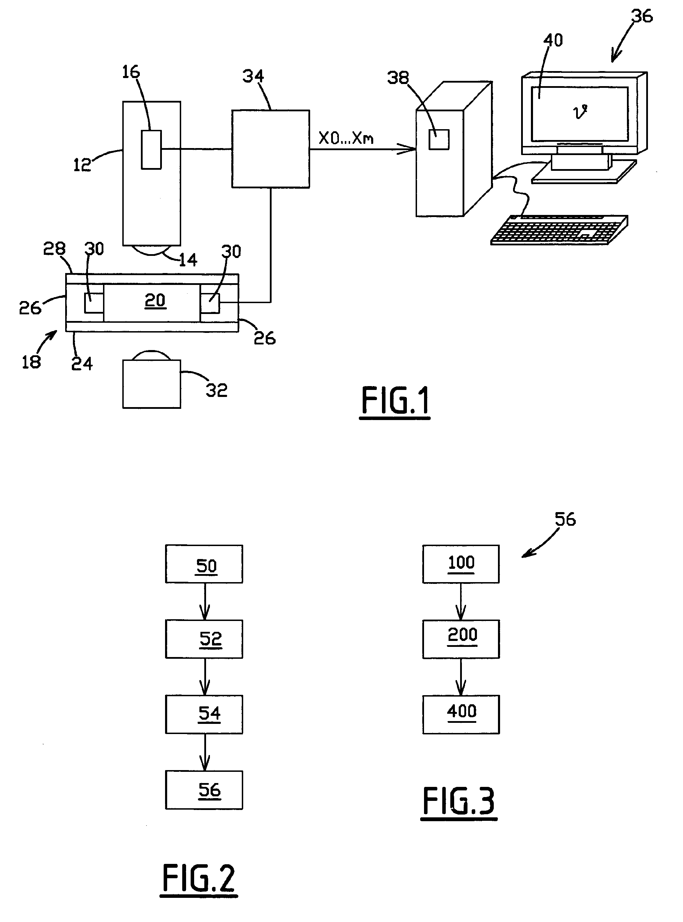

En référence à la figure 1, un système d'imagerie microscopique 10 comprend tout d'abord un microscope optique 12. Le microscope optique 12 comprend une lentille 14 définissant un plan focal $P$. Le microscope optique 12 comprend en outre une caméra 16, par exemple une caméra CCD permettant d'obtenir des images dans le plan focal $P$.

Le système d'imagerie microscopique 10 comprend en outre un réceptacle 18 pour recevoir un objet $O$ de taille microscopique, tel qu'une cellule, dans lequel une matière fluorescente a été introduite.

De manière générale, il est possible de remplacer la matière fluorescente par tout marqueur adapté à l'objet étudié, et apte à être détecté par le système d'imagerie utilisé.

Le réceptacle 18 comprend une chambre 20 destinée à contenir un microsystème fluide comprenant l'objet $O$. La chambre 20 est située en face de la lentille 14 du microscope optique 12. La chambre 20 est délimitée par un support 24, des parois latérales 26 et une vitre 28 couvrant les parois 26 afin que la lentille puisse observer le contenu de la chambre 20. La chambre 20 définit un volume U.

Les parois latérales comprennent des microélectrodes 30 pour créer un champ électrique, ce dernier permettant de positionner l'objet $O$.

Le système d'imagerie microscopique 10 comprend en outre un dispositif 32 d'illumination du marqueur contenu dans l'objet $O$, de sorte que chaque point $o$ de l'objet $O$ émette une luminosité $O(o)$. L'environnement de l'objet $O$ émet au contraire une luminosité très faible, voir nulle.

Le système d'imagerie microscopique 10 comprend également une unité de contrôle 34, agissant en particulier sur les microélectrodes 30 pour mettre l'objet $O$ en mouvement, et sur la caméra 16 pour prendre une séquence d'images en coupe $X_0...X_m$, dans le plan focal $P$ (qui forme ainsi un plan de coupe $P$ du volume $U$ de la chambre 20, et en particulier de l'objet $O$), à des instants de prises de vue $t_0 ...t_m$ respectifs.

Un repère XYZ est attaché au plan de coupe $P$. Un autre repère, dit repère de l'objet $O$, est en outre attaché à l'objet $O$. Cet autre repère est choisi, de préférence, tel qu'il est confondu avec le repère XYZ à l'instant initial $t_0$. Par ailleurs, le terme «un point de l'objet» signifie par la suite, sauf indication explicite, un point dans le repère de l'objet $O$.

Chaque image en coupe $X_k$ s'étend sur un plan support $P_k$ attaché à l'objet $O$, ce plan support $P_k$ étant confondu avec le plan de coupe $P$ au moment $t_k$ de la prise de l'image en coupe $X_k$.

Chaque image en coupe $X_k$ comprend une grille $G$ de pixels $s$. La grille $G$ est la même pour toutes les images en coupe $X_0...X_m$. Chaque pixel $s$ enregistre une valeur $X_k(s)$ de la luminosité du marqueur à la position du pixel $s$ dans le volume $U$ de la chambre 20. Dans la présente description, cette valeur de luminosité est enregistrée de manière monochrome, sous la forme d'un niveau de gris.

Ainsi, lorsqu'un point $o$ de l'objet $O$ se trouve à la position du pixel $s$, à l'instant $t_k$ de prise de l'image en coupe $X_k$, la valeur $X_k(s)$ de ce pixel $s$ est fonction notamment de la luminosité $O(o)$ du point $o$. Lorsque aucun point de l'objet $O$ ne se trouve à la position du pixel $s$, c'est la luminosité du « vide » qui est enregistrée (en fait, celle du fluide comprenant l'objet $O$). Ainsi, le fond des images en coupe $X_0...X_m$ a un niveau de gris bas.

En outre, la valeur $X_k(s)$ d'un pixel $s$ dépend également d'une fonction d'étalement du point (« Point Spread Function » ou PSF) introduisant un flou. En général, la fonction d'étalement du point a une forme allongée perpendiculairement au plan de coupe $P$.

Le système d'imagerie microscopique 10 comprend par ailleurs un dispositif informatique 36 de traitement d'image, relié à l'unité de contrôle 30 pour recevoir les images en coupe $X_0...X_m$. Un programme d'ordinateur 38 de reconstruction est installé sur le dispositif informatique 36. Le programme d'ordinateur 38 est conçu pour mettre en oeuvre un procédé de reconstruction destiné à déterminer une représentation tridimensionnelle $V$ de l'objet $O$ à partir de la séquence d'images en coupe $X_0...X_m$. Le dispositif informatique 36 est apte à exporter la représentation tridimensionnelle $V$ sous forme d'un fichier numérique et/ou à afficher cette représentation tridimensionnelle $V$ sur un écran 40.

## DESCRIPTION DU PROCEDE D'ANALYSE

Un procédé d'analyse d'un objet $O$, mis en oeuvre par le système d'imagerie 10 est illustré sur la figure 2. En référence à cette figure 2, le procédé d'analyse d'un objet $O$ comprend une étape 50 d'introduction de l'objet $O$ dans la chambre 20, puis une étape 52 de configuration de l'unité de contrôle 34 afin de faire tourner l'objet $O$ autour d'un axe de rotation fixe $L$, avec une vitesse angulaire fixe $\tau$. L'axe $L$ est défini par un point $u_0$ sur l'axe de rotation $L$ - appelé par la suite point de passage $u_0$ - et une direction $\vec{a}$ de l'axe de rotation $L$, de norme unitaire : $\|\vec{a}\| = 1$. L'axe de rotation $L$ n'est pas perpendiculaire au plan de coupe $P$.

Le procédé d'analyse comprend en outre une étape 54 d'acquisition d'au moins une séquence d'images en coupe $X_0...X_m$ à des instants de prises de vue $t_0...t_m$ respectifs, et une étape 56 de traitement des images en coupe $X_0...X_m$, par le programme d'ordinateur 38.

Dans la pratique, l'axe de rotation $L$ n'est jamais exactement celui réglé par l'unité de contrôle 34. L'invention propose donc de déterminer l'axe de rotation $L$ à partir des images en coupe $X_0...X_m$, puis de déterminer une représentation tridimensionnelle $V$ à partir de l'axe de rotation $L$ déterminé, plutôt qu'à partir de l'axe de rotation réglé à partir du réglage de l'unité de contrôle 34.

En outre, dans la pratique, le mouvement de l'objet $O$ n'est jamais parfaitement rotatif. L'erreur de mouvement par rapport à la rotation d'axe fixe est représentée par une suite de translations de perturbation $T_1...T_m$, chaque translation de perturbation étant subie par l'objet $O$ entre deux images en coupe successives $X_{k-1}$, $X_k$ respectives. Les translations de perturbation $T_1...T_m$ sont de direction et de valeur variables.

Ainsi, la position d'un point $o$ de l'objet $O$ à un instant de prise de vue $t_k$, en partant de la position $u$ du point $o$ à l'instant de prise de vue $t_{k-1}$ précédent, est :

$$R_{\vec{a},\tau(t_k - t_{k-1})}(u - u_0) + u_0 + T_k \, ,$$

où $R_{\vec{a},\tau(t_k - t_{k-1})}$ est la matrice de rotation d'angle $\tau(t_k - t_{k-1})$ autour de l'axe de direction $\vec{a}$ passant par l'origine du repère XYZ. On remarquera que la matrice de rotation $R_{\vec{a},\alpha}$ d'angle $\alpha$ autour d'un axe de direction $\vec{a}$ passant par l'origine est donnée, selon la formule de Rodriques, par :

$$R_{\vec{a},\alpha} = I + \sin\alpha [\vec{a}]_\times + (1 - \cos\alpha)[\vec{a}]_\times^2 \, ,$$

où $I$ est la matrice identité 3-par-3, et $[\vec{a}]_\times = \begin{bmatrix} 0 & -a_3 & a_2 \\ a_3 & 0 & -a_1 \\ -a_2 & a_1 & 0 \end{bmatrix}$ avec $\vec{a} = (a_1, a_2, a_3)$.

On remarquera également que la translation de perturbation $T_k$ ne dépend pas de la position de $u_0$ sur l'axe de rotation $L$.

## Traitement des images en coupe acquises

En référence à la figure 3, l'étape de traitement 56 mise en oeuvre par le programme d'ordinateur 38 comprend tout d'abord une étape 100 d'extension de chaque image en coupe $X_0...X_m$ au cours de laquelle sont calculées des valeurs de points entre les pixels $s$, ainsi que des valeurs de points en dehors de la grille $G$. Par exemple, les valeurs des points entre les pixels $s$ sont calculées par interpolation ou par lissage à partir des valeurs des pixels $s$ de la grille $G$, tandis que les valeurs des points en dehors de la grille $G$ sont mis à un niveau faible de gris, par exemple 0. Par la suite, un point quelconque d'une image en coupe, pixel dont la valeur est mesurée ou point dont la valeur est calculée, sera noté $x$, tandis qu'un pixel proprement dit d'une image en coupe sera noté $s$. La valeur d'un point $x$ sera notée $X_k(x)$, tandis que la valeur d'un pixel $s$ sera notée $X_k(s)$.

L'étape 56 mise en oeuvre par le programme d'ordinateur 38 comprend en outre une étape 200 de détermination des paramètres du mouvement de l'objet $O$ par rapport au plan de coupe $P$. Au cours de cette étape de détermination des paramètres du mouvement 200, les paramètres de mouvement régulier (vitesse angulaire $\tau$, l'axe de rotation $L$)

sont déterminés, et ainsi que les paramètres de mouvement de perturbation (suite de translations de perturbation $T_1...T_m$).

Les paramètres de mouvement (vitesse angulaire $\tau$, l'axe de rotation $L$ et suite de translations de perturbation $T_1...T_m$) déterminent la position de l'objet 0 à chaque instant de prises $t_k$ d'une image en coupe $X_k$ : la position à l'instant de prise $t_k$ d'un point $o$ qui se situe à la position $u$ à l'instant initial $t_0$ est donnée par:

$$R_{\vec{a},\tau(t_k-t_0)}(u-u_0)+u_0+\overline{T}_k \, ,$$

où $\overline{T}_k=R_{\overline{a},\tau(tk-t1)}T_1+R_{\overline{a},\tau(tk-t2)}T_2+\cdots+R_{\overline{a},\tau(\underline{tk}-tk-1)}T_{k-1}+T_k$, la translation cumulée depuis l'instant initial $t_0$ jusqu'à l'instant $t_k$ de prise de l'image en coupe $X_k$, avec $\overline{T}_0=0$.

La position de l'objet $O$ à chaque instant de prise $t_k$ d'image en coupe $X_k$ détermine la position du plan de coupe $P$ à l'instant de prise $t_k$ dans un repère quelconque attaché à l'objet $O$ (et vice-versa) : la position dans le repère de l'objet $O$ choisi (qui est confondu avec le repère fixe XYZ à l'instant de prise initial $t_0$) d'un pixel $s$ du plan de coupe $P$ à l'instant de prise $t_k$ est :

$$R^t_{\vec{a},\tau(t_k-t_0)}(\pi_3 s-u_0-\overline{T}_k)+u_0$$

avec $R^t_{\vec{a},\tau(t_k-t_0)}$ la matrice transposée de $R_{\vec{a},\tau(t_k-t_0)}$, $\pi_3 = \begin{bmatrix} 1 & 0 \\ 0 & 1 \\ 0 & 0 \end{bmatrix}$, $\pi_3 x$ est la position dans le repère tridimensionnel XYZ d'un point $x$ d'une image en coupe, en confondant le plan support de l'image en coupe avec le plan XY. La position du plan de coupe $P$ dans tout autre repère attaché à l'objet $O$ à chaque instant de prise $t_k$ découle de la position du plan de coupe $P$ dans le repère de l'objet $O$ choisi à l'instant de prise $t_k$ et de la relation entre le repère de l'objet choisi et cet autre repère.

Dans la description qui va suivre, le mouvement de l'objet $O$ par rapport au plan de coupe $P$ est exprimé dans le repère XYZ attaché au plan de coupe $P$. Bien évidemment, le mouvement de l'objet $O$ par rapport au plan de coupe $P$ pourrait être exprimé dans un autre repère de référence, qui ne serait pas obligatoirement attaché au plan de coupe. Dans ce cas, la détermination du mouvement de l'objet $O$ par rapport au plan de coupe $P$ comprendrait en outre la détermination du mouvement du plan de coupe $P$ par rapport à cet autre repère de référence.

L'étape 56 mise en oeuvre par le programme d'ordinateur 38 comprend en outre une étape 400 de détermination d'une représentation tridimensionnelle $V$ de l'objet $O$, à partir des images en coupe $X_0 ... X_m$ et des paramètres de mouvement $\tau$, $L$, $T_1...T_m$.

### Détermination de la vitesse angulaire en valeur absolue

Le signe de la vitesse angulaire $\tau$ indique le sens de la rotation du mouvement. Le signe de la vitesse angulaire $\tau$ est positif si la rotation se fait dans le sens positif par rapport à la direction $\vec{a}$, et négatif si la rotation se fait dans le sens négatif par rapport à la direction $\overline{a}$. Le signe de la vitesse angulaire $\tau$ est connu, par exemple, d'après le réglage du système d'imagerie 10, une fois la direction $\overline{a}$ de l'axe de rotation choisie.

Si le signe de la vitesse angulaire $\tau$ n'est pas connu, il peut être choisi arbitrairement : dans ce cas, la représentation tridimensionnelle $V$ de l'objet $O$ sera au pire la représentation tridimensionnelle $V$ du miroir de l'objet $O$.

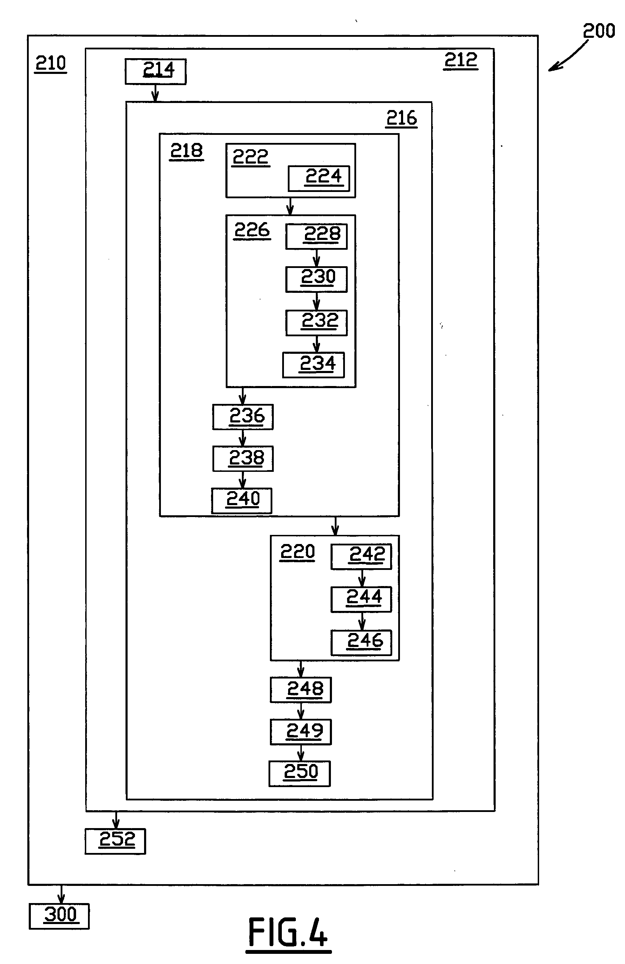

En référence à la figure 4, l'étape 200 de détermination des paramètres du mouvement comprend une étape 210 de détermination de la vitesse angulaire en valeur absolue $|\tau|$.

Cette étape 210 comprend tout d'abord une étape 212 de détermination d'une période $p > 0$ telle que chaque couple d'images en coupe $X_k$, $X_{k'}$ prises à des instants respectifs $t_k$, $t_{k'}$ séparés l'un de l'autre d'un temps sensiblement égal à un multiple (non nul) de la période $p$, soient sensiblement similaires. Cette période $p$ est ainsi la période de révolution de l'objet $O$.

Plus précisément, l'étape 212 de détermination de la période de révolution $p$ comprend une étape 214 de détermination d'un groupe initial de périodes candidates $p_1...p_n$ positives, et une étape 216 de sélection de la période de révolution $p$ parmi les périodes candidates $p_1...p_n$ du groupe initial.

Dans l'exemple décrit, l'étape de détermination 214 des périodes candidates $p_1...p_n$ consiste à choisir les périodes candidates $p_1...p_n$. De préférence, les périodes candidates $p_1...p_n$ sont choisies uniformément espacées.

*Détermination simple de la période*

L'étape 216 de sélection de la période de révolution $p$ comprend, dans une variante simple, la détermination de la meilleure période parmi les périodes candidates $p_1...p_n$, en maximisant la vraisemblance suivant un modèle probabiliste choisi.

*Détermination évoluée de la période*

Cependant, pour améliorer la fiabilité de la détermination de la période de révolution $p$, une ou plusieurs sélections préalables sont réalisées sur les périodes candidates $p_1...p_n$, le modèle probabiliste tenant compte de cette ou de ces sélections.

En référence à la figure 4, l'étape 216 de sélection de la période de révolution $p$ comprend deux étapes 218, 220 de sélection, afin d'obtenir, d'une part, pour chaque image en coupe $X_k$, un premier sous-ensemble respectif $p_{j(k,1)},...,p_{j(k,e)}$ de période candidates et, d'autre part, pour toutes les images en coupes $X_0...X_m$, un second sous-ensemble $p_{j(1)}...p_{j(l)}$ de période candidates.

*Sélection des premiers sous-ensembles*

La première étape 218 de sélection des premiers sous-ensembles $p_{j(k,1)},...,p_{j(k,e)}$ comprend, pour chaque image en coupe $X_k$ et pour chaque période candidate $p_j$, une étape de détermination 222 d'images en coupe sensiblement périodiques $X_{k'}$ (suivant la période candidate $p_j$) à l'image en coupe $X_k$.

L'étape 222 de détermination des images en coupe sensiblement périodiques $X_{k'}$ comprend une étape 224 de détermination des images en coupes $X_{k'}$ prises à des instants de prise de vue $t_{k'}$ séparés de l'instant $t_k$ de prise de l'image en coupe $X_k$ par un temps proche d'un multiple (non nul) de la période candidate $p_j$. « Proche » signifie que la différence entre le temps proche et le multiple (non nul) de la période candidate $p_j$, est compris dans un intervalle de temps $J$ comprenant 0. De préférence, l'intervalle de temps $J$ est centré sur 0. Par exemple, $J = [\zeta, \zeta]$ avec $\zeta$ petit par rapport à chaque période candidate $p_j$, avec $\zeta \leq p_j/3$ pour l'ensemble des périodes candidates $p_j$. En variante, $\zeta$ varie en fonction de la période candidate $p_j$ en choisissant par exemple $\zeta = p_j/10$ pour chaque période candidate $p_j$.

La première étape 218 de sélection des premiers sous-ensembles $\{p_{j(k,1)},...,p_{j(k,e)}\}$ comprend en outre une étape 226 de recentrage de chaque image en coupe sensiblement périodique $X_{k'}$ par rapport à l'image en coupe $X_k$.

L'étape de recentrage 226 comprend tout d'abord une étape de sélection 228 de pixels lumineux, dans l'image en *coupe $X_k$* et dans l'image en coupe sensiblement périodique $X_{k'}$. De préférence, les pixels sélectionnés sont ceux dont le niveau de gris est supérieur à un seuil prédéterminé $\alpha$, ce seuil étant par exemple le $q$-quantile de niveau de gris des images en coupes $X_0...X_m$ (ce qui signifie que la proportion des pixels des images en coupes $X_0...X_m$ qui ont un niveau de gris inférieur ou égal à $\alpha$ est sensiblement égale à $q$, et celle des pixels qui ont un niveau de gris supérieur à $\alpha$ est sensiblement égale à *1-q*), avec $q$ valant par exemple entre 60% et 95%.

L'étape de recentrage 226 comprend en outre une étape 230 de calcul, d'une part, d'un premier centre $d(X_k)$ des points lumineux sélectionnés dans l'image en coupe $X_k$ et, d'autre part, le calcul d'un second centre $d(X_{k'})$ des points lumineux sélectionnés dans l'image en coupe $X_{k'}$.

Le centre d'une image $X(X_k$ ou $X_{k'})$ est donné par :

$$d(X) = \frac{\sum_s 1_{X(s)>\alpha}\, s}{\sum_s 1_{X(s)>\alpha}}$$

où $1_{A>B}$ est la fonction indicatrice : $1_{A>B} = 1$ si $A > B$, et $1_{A>B} = 0$ sinon. L'étape de recentrage 226 comprend en outre la détermination 232 d'un décalage $d_{k,k'}$ entre les centres des points lumineux de l'image en coupe $X_k$ et de l'image en coupe sensiblement périodique $X_{k'}$ : $d_{k,k'} = d(X_k)-d(X_{k'})$.

L'étape de recentrage 226 comprend en outre une étape 234 de translation de l'image en coupe sensiblement périodique $X_{k'}$ du décalage $d_{k,k'}$ entre les centres, afin d'obtenir une image en coupe sensiblement périodique centrée, notée $Trans(X_{k'},d_{k,k'})$. L'image en coupe sensiblement périodique centrée $Trans(X_{k'},d_{k,k'})$ est calculée, pour chaque pixel $s$, par :

EP 2 279 488 B1

$$Trans(X_{k'}, d_{k,k'})(s) = X_{k'}(s - d_{k,k'}).$$

La première étape 218 de sélection des premiers sous-ensembles $P_{j(k,1)},...,p_{j(k,e)}$ comprend en outre une étape 236 de détermination d'une distance $T(k,k')$ entre l'image en coupe $X_k$ et chaque image en coupe sensiblement périodique centrée $Trans(X_{k'}, d_{k,k'})$. De préférence, la distance $T(k,k')$ est donnée par la relation suivante :

$$\forall\, 0 \leq k, k' \leq m,\ \mathsf{T}(k,k') = \chi(X_k, Trans(X_{k'}, d_{k,k'})),$$

avec $\chi$ une fonction distance, $\chi(X,Y)$ mesure la différence entre deux image $X$ et $Y$. La fonction distance $\chi$ est par exemple une distance quadratique des niveaux de gris des pixels entre les deux images, donnée par :

$$\chi(X,Y) = \sum_s (X(s) - Y(s))^2.$$

La première étape 218 de sélection des premiers sous-ensembles $p_{j(k,1)},...,p_{j(k,e)}$ comprend en outre une étape 238 de détermination d'un niveau de similitude périodique $sim(X_k, p_j)$ de l'image en coupe $X_k$ à partir des distances $T(k,k')$.

Le niveau de similitude périodique $sim(X_k, p_j)$ caractérise le niveau de similitude de l'image en coupe $X_k$ avec les images en coupe sensiblement périodiques $X_{k'}$, pour la période candidate $p_j$. De préférence, l'étape 238 de détermination d'un niveau de similitude périodique $sim(X_k, p_j)$ comprend une étape de calcul de l'inverse de la similitude par la relation suivante :

$$sim^{-1}(X_k, p_j)\ =\ \begin{cases} \sum_{r \neq 0} v(k,j,r) / \sum_{r \neq 0} h(k,j,r) & si\ \sum_{r \neq 0} h(k,j,r) > 0 \\ \infty & sinon \end{cases}.$$

avec :

$$v(k,j,r)\ =\ \sum_{i\,:\,-\zeta \leq t_i - rp_j \leq \zeta} w(t_i - rp_j)\mathsf{T}(k,i),$$

$$h(k,j,r)\ =\ \sum_{i\,:\,-\zeta \leq t_i - rp_j \leq \zeta} w(t_i - rp_j),$$

où $r$ est un nombre entier non nul, $\zeta$ est défini de la même manière que pour l'étape 224 de détermination des images en coupe sensiblement périodiques, et $w$ est une fonction de pondération positive définie sur l'intervalle $J = [-\zeta, \zeta]$. De préférence, $w$ est symétrique par rapport à 0 ($w(t) = w(-t)$), et les valeurs élevées de $w$ sont concentrées autour de 0. Par exemple $w(t) = \exp(-ct^2)$ avec $c$ une constante positive. La fonction $w$ permet de diminuer l'influence des images en coupe sensiblement périodiques $X_{k'}$ qui s'éloignent du multiple de la période candidate $p_j$.

La première étape 218 de sélection des premiers sous-ensembles $p_{j(k,1)},...,p_{j(k,e)}$ comprend en outre une étape 240 de sélection, parmi les périodes candidates $p_1...p_n$, pour chaque image en coupe $X_k$, d'un premier sous-ensemble $p_{j(k,1)},...,p_{j(k,e)}$ regroupant les périodes candidates $p_1...p_n$ ayant les niveaux de similitude les plus élevés (c'est-à-dire les plus petites valeurs de $sim^{-1}(X_k, p_j)$). De préférence, un nombre prédéterminé $e$ de périodes candidates sont sélectionnées. De préférence également, ce nombre $e$ est choisi entre 1 et 15.

*Sélection du second sous-ensemble*

La seconde étape 220 de sélection du second sous-ensemble $p_{j(1)}...p_{j(l)}$ de périodes candidates comprend, pour chaque période candidate $p_j$, une étape 242 de calcul d'un nombre d'apparitions $S(p_j)$ de la période candidate $p_j$, correspondant au nombre de premiers sous-ensembles $p_{j(k,1)},...,p_{j(k,e)}$ dans lesquels la période candidate $p_j$ apparaît.
Les valeurs du nombre d'apparitions $S$ pour les périodes candidates $p_1...p_n$ sont par exemple données par la relation :

$$\forall 1 \leq j \leq n, S(p_j) = \sum_{k=0}^{m} 1_{p_j \in \{p_{j(k,1)},...,p_{j(k,e)}\}},$$

où $1_{A \in B}$ est la fonction indicatrice : $1_{A \in B} = 1$ si $A \in B$, et $1_{A \in B} = 0$ sinon.
La seconde étape 220 de sélection du second sous-ensemble $p_{j(1)}...p_{j(l)}$ de période candidate comprend en outre, pour chaque période candidate $p_j$, une étape 244 de calcul d'une dispersion $\Im$ des valeurs du nombre d'apparition $S$, autour de chaque multiple (supérieur ou égal à 1) de la période candidate $p_j$. La dispersion

$$[\vec{a}]_\times = \begin{bmatrix} 0 & -a_3 & a_2 \\ a_3 & 0 & -a_1 \\ -a_2 & a_1 & 0 \end{bmatrix}$$

pour une période candidate $p_j$ indique si des valeurs élevées du nombre d'apparition $S$ sont concentrées (dispersion faible) ou dispersées (dispersion élevée) autour de chaque multiple (supérieur ou égal à 1) de la période candidate $p_j$.

$$[\vec{a}]_\times = \begin{bmatrix} 0 & -a_3 & a_2 \\ a_3 & 0 & -a_1 \\ -a_2 & a_1 & 0 \end{bmatrix}$$

De préférence, la dispersion $\begin{bmatrix} 0 & -a_3 & a_2 \\ a_3 & 0 & -a_1 \\ -a_2 & a_1 & 0 \end{bmatrix}$ d'une période candidate $p_j$ est calculée de telle sorte que, plus une autre période candidate $p_{j'}$ s'éloigne du plus proche multiple (supérieur ou égal à 1) de la période candidate $p_j$, plus la valeur du nombre d'apparition $S$ de cette autre période candidate $p_{j'}$ contribue à la dispersion.

De préférence, la dispersion $\begin{bmatrix} 0 & -a_3 & a_2 \\ a_3 & 0 & -a_1 \\ -a_2 & a_1 & 0 \end{bmatrix}$ de la période candidate $p_j$ est donnée par la relation :

$$\forall 1 \leq j \leq n, \Im(p_j) = \sum_{i=1}^{n} \frac{|[\frac{p_i}{p_j}]p_j - p_i|}{p_j} S(p_i),$$

où $[x]$ est l'entier le plus proche de $x$.
La seconde étape 220 de sélection du second sous-ensemble $p_{j(1)}...p_{j(l)}$ de périodes candidates comprend en outre une étape 246 de sélection, parmi les périodes candidates $p_j$, du second sous-ensemble $p_{j(1)}...p_{j(l)}$ des périodes

$$[\vec{a}]_\times = \begin{bmatrix} 0 & -a_3 & a_2 \\ a_3 & 0 & -a_1 \\ -a_2 & a_1 & 0 \end{bmatrix}$$

candidates ayant les dispersions les plus faibles. De préférence, un nombre prédéterminé $l$ de périodes candidates sont sélectionnées. De préférence également, ce nombre $l$ est choisi entre 4 et 40.

*Sélection de la période à partir des premiers sous-ensembles, du second sous-ensemble, et d'une loi de probabilité*

La sélection 216 de la période de révolution $p$ comprend en outre une étape 248 de détermination d'une loi de probabilité $P_p$ décrivant la probabilité qu'une période $p_j$ soit choisie, au cours de l'étape 218, dans au moins un des premiers ensembles $p_{j(k,1)},...,p_{j(k,e)}$. La loi de probabilité $P_p$ est définie avec la période de révolution $p$ comme paramètre.

La sélection 216 de la période de révolution $p$ comprend en outre une étape 249 de calcul d'un histogramme $h$ des périodes candidates sélectionnées à l'étape 218. Il a été remarqué que les grandes valeurs de l'histogramme $h$ sont en général concentrées autour de la vraie valeur de la période de révolution $p$ et des multiples de la vraie valeur de la période de révolution $p$.

De préférence, on considère que les sélections pour obtenir les périodes candidates à l'étape 218 sont approximativement indépendantes, et que le choix de chacune des périodes candidates à l'étape 218 est aléatoirement réalisé selon une loi de probabilité $P_p$.

Pour cela, la loi de probabilité $P_p$, ayant comme paramètre la période de révolution $p$, est telle que la forme de la fonction de probabilité $P_p$ puisse « épouser » celle de l'histogramme $h$ à un facteur de dilatation près, en faisant varier la valeur du paramètre $p$.

Plus précisément, on considère que chaque période $p_j$ obtenue à l'étape 218 est sélectionnée soit aléatoirement, avec une faible probabilité $\beta$, parmi toutes les périodes candidates $p_1...p_n$ selon la loi uniforme, soit avec la probabilité $1-\beta$ par un choix alternatif qui consiste à choisir une période autour d'un multiple (supérieur ou égal à 1) de la période de révolution $p$. Ce choix alternatif est réalisé en choisissant d'abord un multiple $ip$ ($i$ un nombre entier et $i \geq 1$) avec une probabilité $b_i$ et ensuite en choisissant $p_j$ autour de $ip$ ($ip$ étant déjà choisi) avec la probabilité $\overline{v}_{ip}(p_j)$.

Dans ce cas, la loi de probabilité $P_p$ est définie par la relation :

$$\forall 1 \leq j \leq n, P_p(p_j) = \frac{\beta}{n} + (1-\beta)\sum_{i=1}^{\ell(p)} b_i \overline{v}_{ip}(p_j),$$

où, $\ell(p)$ le nombre des multiples de $p$.

La loi $P_p$ est un mélange de la loi uniforme sur l'ensemble des périodes candidates $p_1...p_n$, et des lois $\overline{v}_{ip}$ avec $1 \leq i \leq \ell(p)$.

La probabilité $\overline{v}_{ip}(p_j)$ est de préférence la translation d'une fonction de support $v$ de la valeur $ip$ : $v_{ip}(x) = v(x-ip)$. De préférence, on choisit la fonction de support $v$ finie et positive pour définir $b_i$ et $\overline{v}_{ip}$. De préférence également, $v$ est symétrique autour de 0 (c'est-à-dire que $v(-x) = v(x)$) et centrée sur 0. Par exemple, on prendra $v(x) \propto e^{-dx^2}1_{|x|\leq\delta}$, ou bien $v(x) \propto (\delta-|x|)1_{|x|\leq\delta}$ pour $d$ et $\delta$ constantes positives données.

De préférence $\ell(p) = \max\{i \in \mathbf{N}^* : \{p_1,...,p_n\} \cap supp(v_{ip}) \neq \varnothing\}$, avec $supp(v_{ip})=\{x:v_{ip}(x)\neq 0\}$, et $\overline{v}_{ip}(p_j)=v_{ip}(p_j)/c_i$,

$b_i = \dfrac{c_i}{\sum_{k=1}^{\ell(p)} c_k}$, avec $c_i = \sum_{k=1}^{n} v_{ip}(p_k)$. En pratique $\beta$ est choisi entre 0 et 25%.

La sélection 216 de la période de révolution $p$ comprend en outre une étape 250 de détermination de la période de révolution $p$, comme étant la période du second sous-ensemble de périodes candidates $p_{j(1)}...p_{j(l)}$ qui maximise la vraisemblance $Vrais(p)$ (ou, de manière équivalente, la log-vraisemblance $\log Vrais(p)$) associée à la loi de probabilité $P_p$ précédente, étant donnés les premiers sous-ensembles de périodes sélectionnées $p_{j(k,1)},...,p_{j(k,e)}, 0 \leq k \leq m$. La log-vraisemblance est donnée par :

$$\log Vrais(p) = \sum_{j=1}^{n} S(p_j) \log P_p(p_j).$$

En variante, l'étape 212 de détermination de la période de révolution $p$ ne comprend pas l'étape 220 de détermination du second sous-ensemble, et, à l'étape 250, la période de révolution $p$ est déterminée comme étant la période de l'ensemble de périodes candidates $p_1...p_n$, maximisant la vraisemblance $Vrais(p)$ précédente.

L'étape 210 de détermination de la vitesse angulaire en valeur absolue $|\tau|$ comprend alors une étape 252 de calcul de la vitesse angulaire en valeur absolue $|\tau|$ à partir de la période de révolution $p$ :

$$|\tau| = 2\pi/p .$$

Une fois la direction $\vec{a}$ de l'axe de rotation choisie, la vitesse angulaire $\tau$ est déterminée du sens connu (ou supposé) de rotation par rapport à la direction $a$ de l'axe de rotation, par la relation suivante :

$$\tau = \begin{cases} 2\pi/p & \text{pour des rotations positives} \\ -2\pi/p & \text{pour des rotations négatives} \end{cases} .$$

L'étape 200 de détermination des paramètres du mouvement comprend en outre une étape 300 de détermination de l'axe de rotation $L$ et de la suite de translations de perturbation $T_1...T_{m'}$.

### Première variante pour déterminer l'axe de rotation et la suite de translations de perturbation

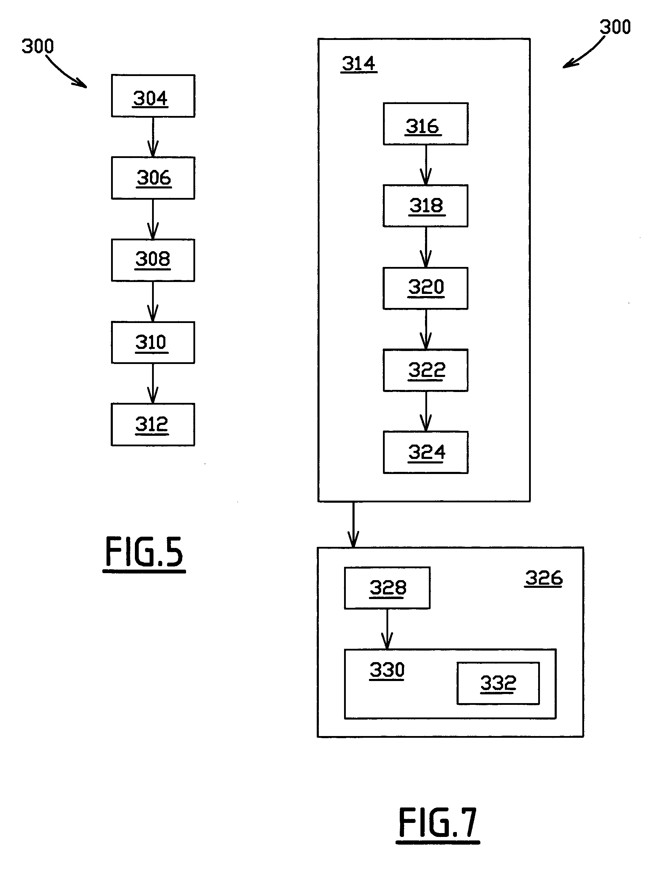

La figure 5 illustre une première variante de l'étape 300 de détermination de l'axe de rotation $L$ et de la suite de translations de perturbation $T_1...T_m$.

L'étape 300 de détermination de l'axe de rotation $L$ et de la suite de translations de perturbation $T_1...T_m$ est mise en oeuvre en déterminant un axe de rotation $L$ et une suite de translations de perturbation $T_1...T_m$ telles que la valeur $X_k(s)$ de chaque pixel $s$ de chaque image en coupe $X_k$, soit sensiblement égale, pour chaque image en coupe spatialement voisines $X_{k'}$ (c'est-à-dire dont le plan support $P_{k'}$ est spatialement voisin du plan support $P_k$ de l'image en coupe $X_k$), à la valeur $X_{k'}(x')$ d'un point $x'$ « proche » de ce pixel $s$, sur l'image en coupe spatialement voisine $X_{k'}$. Le point le plus proche $x'$ est déterminé suivant un critère de proximité donné.

Plus précisément, l'étape 300 de détermination de l'axe de rotation $L$ et de la suite de translations de perturbation $T_1...T_m$ comprend une étape 304 de détermination, pour chaque image en coupe $X_k$, des images en coupe spatialement voisines $X_{k'}$ de cette image en *coupe $X_k$*.

Une image en coupe $X_{k'}$ est spatialement voisine de l'image en coupe $X_k$, lorsque l'angle séparant leurs plans support respectifs $P_k$, $P_{k'}$, est inférieur à une valeur prédéterminée $\Delta_1$. L'angle est de préférence déterminé à partir de la vitesse angulaire en valeur absolue $|\tau|$ et des instants $t_k$, $t_{k'}$ de prise des deux images en coupe $X_k$, $X_{k'}$. Cette valeur prédéterminée $\Delta_1$ est de préférence prise inférieure ou égale à 12 degrés. Pour une image en coupe $X_k$, les images en coupes spatialement voisines $X_{k'}$ sont donc les images en coupe vérifiant :

il existe un entier $q$ tel que $|\tau|(t_k - t_{k'}) = 2\pi q + r$, avec $|r| \leq \Delta_1$.

La condition précédente sur l'angle séparant les images en coupe $X_k$ et $X_{k'}$ est équivalente à une condition sur l'intervalle de temps séparant les prises des deux images en coupe.

L'étape 300 de détermination de l'axe de rotation $L$ et de la suite de translations de perturbation $T_1...T_m$ comprend en outre une étape 306 de choix d'un critère de proximité.

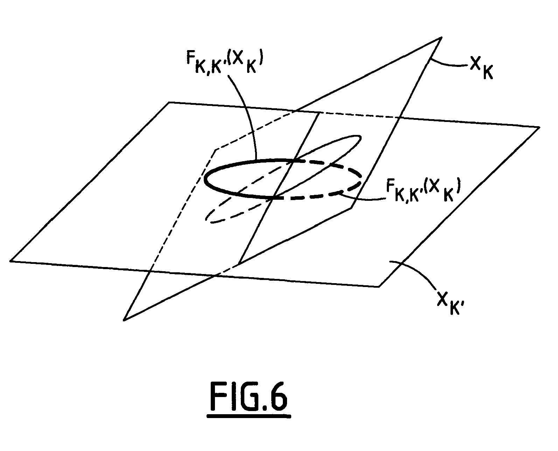

En référence à la figure 6, de préférence, ce critère de proximité est que le point $x'$ d'une image en coupe spatialement voisine $X_{k'}$, le plus proche d'un pixel $s$ de l'image en coupe $X_k$, est la position $Proj_{k,k'}(s) = x'$ de la projection orthogonale $o'$ d'un point $o$ de l'objet $O$ sur le plan support $P_k$ de l'image en coupe $X_k$, situé sur le pixel $s$ *de* l'image en coupe $X_k$, sur le plan support $P_{k'}$ de l'image spatialement voisine $X_{k'}$.

Ce choix de ce critère de proximité est particulièrement adapté dans le cas d'une fonction d'étalement du point ayant une forme allongée perpendiculairement au plan de coupe $P$.

Ainsi, de retour à la figure 5, l'étape 300 de détermination de l'axe de rotation $L$ et de la suite de translations de perturbation $T_1...T_m$ comprend en outre une étape 308 de calcul de la projection orthogonale $F_{k,k'}(X_k)$ de l'image en coupe $X_k$ sur le plan support $P_{k'}$ de chaque image en coupe spatialement voisine $X_{k'}$ de l'image en coupe $X_k$.

De préférence, l'étape 308 de calcul de la projection orthogonale $F_{k,k'}(X_k)$ est réalisée par le calcul d'une transformation affine $Aff(Q_{k,k'}, v_{k,k'}, X_k)$ de l'image en coupe $X_k$, la transformation affine $Aff(Q_{k,k'}, v_{k,k'}, X_k)$ ayant une composante de transformation linéaire $Q_{k,k'}(\vec{a},\tau)$ et une composante de translation $v_{k,k'}(u_0,\vec{a},\tau,T_1...T_m)$ fonctions de, respectivement, d'une part, la direction $a$ de la valeur d'axe de rotation et la vitesse de rotation $\tau$ et, d'autre part, la valeur d'axe de rotation $L$, la vitesse de rotation $\tau$ et la valeur de suite de translations de perturbation $T_1...T_m$. Ainsi :

$$F_{k,k'}(X) = Aff(Q_{k,k'}(\vec{a},\tau), v_{k,k'}(u_0,\vec{a},\tau,T_1...T_m), X) ,$$

avec *Aff(Q,v,X)* la transformée affine de *X* définie par :

$$\forall x, \quad Aff(Q,v,X)(x) = X(Q^{-1}(x-v))$$

avec *Q* une matrice 2x2 inversible et *v* un vecteur de translation, et

$$Q_{i,j}(\vec{a},\tau) = \pi_2 R_{\vec{a}.\tau(t_j - t_i)} \pi_3,$$

$$v_{i,j}(u_0,\vec{a},\tau,T_1\ldots T_m) = (\pi_2 - \pi_2 R_{\vec{a}.\tau(t_j - t_i)})u_0 + \pi_2 \overline{T}_j - \pi_2 R_{\vec{a}.\tau(t_j - t_i)}\overline{T}_i,$$

où $\pi_2 = \begin{bmatrix} 1 & 0 & 0 \\ 0 & 1 & 0 \end{bmatrix}$ est la projection sur le plan XY, $\pi_3 = \begin{bmatrix} 1 & 0 \\ 0 & 1 \\ 0 & 0 \end{bmatrix}$ , $\pi_3 x$ est la position dans le repère tridimensionnel XYZ d'un point *x* d'une image en coupe, en confondant le plan support de l'image en coupe avec le plan XY, et $\overline{T}_k = R_{\vec{a},\tau(t_k-t1)}T_1 + R_{\vec{a}(t_k1-t2)}T_2, + \cdots + R_{\vec{a},\tau(t_k-tk-1)}T_{k-1} + T_k$, la translation cumulée depuis l'instant initial $t_0$, jusqu'à l'instant $t_k$ de prise de l'image en coupe $X_k$ avec $\overline{T}_0 = 0$, et on remarque que pour chaque possible direction $\vec{a}$ de l'axe de rotation, le signe de la vitesse angulaire $\tau$ est déterminé du sens connu (ou supposé) de rotation par rapport à la direction $\vec{a}$ de l'axe de rotation, par exemple d'après le réglage du système d'imagerie 10, par la relation suivante :

$$\tau = \begin{cases} |\tau| & pour\ des\ rotations\ positives \\ -|\tau| & pour\ des\ rotations\ négatives \end{cases},$$

(si le sens de rotation est choisi arbitrairement : dans ce cas, la représentation tridimensionnelle *V* de l'objet *O* sera au pire la représentation tridimensionnelle *V* du miroir de l'objet *O*).

L'étape 300 de détermination de l'axe de rotation *L* et de la suite de translations de perturbation $T_1\ldots T_m$ comprend en outre une étape 310 de comparaison des valeurs $X_k(s)$ des pixels *s* de chaque image en coupe $X_k$ avec les valeurs $X_k(x')$ des points *x'* les plus proches des images en coupe spatialement voisines $X_{k'}$. De préférence, l'étape 310 de comparaison est réalisée par le calcul d'une distance $\chi(Aff(Q_{k,k'}, v_{k,k'}, X_k), X_{k'})$ entre la transformée affine $Aff(Q_{k,k'}, v_{k,k'}, X_k)$ de l'image en coupe $X_k$. et l'image en coupe voisine $X_{k'}$.

L'étape 300 de détermination de l'axe de rotation *L* et de la suite de translations de perturbation $T_1\ldots T_m$ comprend en outre une étape 312 de détermination d'un axe de rotation *L* et d'une suite de translations de perturbation $T_1\ldots T_m$, dont les valeurs minimisent une fonction de coût *E* comprenant une première partie fonction des distances calculées, de sorte que la réduction des distances calculées entraîne la réduction de la fonction de coût *E*.

De préférence, la fonction de coût *E* comprend également une seconde partie qui dépend, pour une suite de translations de perturbation $T_1\ldots T_m$, de l'amplitude des translations de la suite de translations de perturbation $T_1\ldots T_m$. Cette seconde partie comprend ainsi une fonction de régularisation *Reg,* qui donne une valeur faible lorsque les translations de la suite de translations de perturbation $T_1\ldots T_m$, ont une amplitude faible, et donne une valeur élevée dans le cas contraire. La fonction de régularisation *Reg* est de préférence une norme quadratique, par exemple donnée par la relation :

$$Reg(T_1\ldots T_m) = \|T\|_M^2 \equiv T'MT,$$

avec *M* une matrice symétrique et définie positive, et $T = T_1\ldots T_m$ s'écrit sous la forme d'un vecteur colonne avec les translations $T_k$ les unes à la suite des autres. Par exemple, $M = I_{3m}$, la matrice identité 3mx3m.

De préférence, la fonction de coût *E* est donnée par la relation suivante :

$$E(\vec{a}, x_0, T_1 \ldots T_m) = \sum_{k} \sum_{k' \in N_k} \chi(F_{k,k'}(X_k),\ X_{k'}) + \lambda Reg(T_1 \ldots T_m),$$

avec $N_k$ l'ensemble des indices des images en coupe spatialement voisines de l'image en coupe $X_k$, $\chi(F_{k,k'}(X_k), X_{k'})$ une mesure de la distance entre, d'une part, la projection $F_{k,k'}(X_k)$ de l'image en coupe $X_k$ sur le plan support $P_{k'}$ de l'image en coupe spatialement voisine $X_{k'}$ et, d'autre part, l'image en coupe spatialement voisine $X_{k'}$, et $\lambda \geq 0$ est un paramètre de compromis entre, d'une part, les distances entre les projections $F_{k,k'}(X_k)$ des images en coupe $X_k$ et les images en coupe spatialement voisines $X_{k'}$ des images en coupe $X_k$, et, d'autre part, la régularisation de translations $T_1 \ldots T_m$.

### Deuxième variante pour déterminer l'axe de rotation et la suite de translations de perturbation

Une deuxième variante de l'étape 300 de détermination de l'axe de rotation *L* et de la suite de translations de perturbation $T_1 \ldots T_m$, est représentée sur la figure 7. Cette deuxième variante de l'étape 300 reprend certaines étapes de la première variante de l'étape 300.

En référence à cette figure, l'étape 300 de détermination de l'axe de rotation *L* et de la suite de translations de perturbation $T_1 \ldots T_m$ comprend, la vitesse angulaire en valeur absolue $|\tau|$ étant connue, une étape 314 de détermination de la direction $a$ de l'axe de rotation *L*, avant une étape 326 de détermination d'un point de passage $u_0$ de l'axe de rotation *L* et de la suite de translations de perturbation $T_1 \ldots T_m$.

### Détermination de la direction de l'axe de rotation

L'étape 314 de détermination de la direction $\vec{a}$ de l'axe de rotation *L* comprend une étape 316, identique à l'étape 304 précédente, de détermination, pour chaque image en coupe $X_k$, des images en coupe spatialement voisines $X_{k'}$ de cette image en coupe $X_k$.

L'étape 314 de détermination de la direction $\vec{a}$ de l'axe de rotation *L* comprend en outre une étape 318, identique à l'étape 306 précédente, de choix d'un critère de proximité, selon lequel le point *x'* d'une image en coupe spatialement voisine $X_{k'}$, le plus proche d'un pixel *s de* l'image en coupe $X_k$, est la position $Proj_{k,k'}(s)$ de la projection orthogonale *o'* du point de l'objet *o* confondu avec le pixel *s de* l'image en coupe $X_k$, sur le plan support $P_{k'}$ de l'image spatialement voisine $X_{k'}$.

Ainsi, l'étape 314 de détermination de la direction $\vec{a}$ de l'axe de rotation *L* comprend en outre une étape 320, de calcul de la projection orthogonale $F_{k,k'}(X_k)$ de l'image en coupe $X_k$ sur le plan support $P_{k'}$ de chaque image en coupe spatialement voisine $X_{k'}$ de l'image en *coupe $X_k$*.

De préférence, l'étape 320 de calcul de la projection orthogonale $F_{k,k'}(X_k)$ est réalisée par le calcul d'une transformation affine $Aff(Q_{k,k'}, v_{k,k'}, X_k)$ de l'image en coupe $X_k$, la transformation affine $Aff(Q_{k,k'}, v_{k,k'}, X_k)$ ayant une composante de transformation linéaire $Q_{k,k'}(\vec{a}, \tau)$ et une composante de translation $v_{k,k'}$. La composante de transformation linéaire $Q_{k,k'}(\vec{a}, \tau)$ est une fonction d'une direction $a$ d'axe de rotation et de la vitesse de rotation $\tau$, tandis que, contrairement à la première variante, la composante de translation $v_{k,k'}$ est considérée comme une variable, et n'est donc pas exprimée en fonction des paramètres de mouvement de l'objet *O*. La famille des vecteurs de translation dans les transformations affines $F_{k,k'}$ sera notée dans la suite $v = (v_{k,k'})_{0 \leq k \leq m, k' \in N_k}$. La projection orthogonale $F_{k,k'}(X_k)$ s'exprime donc de la manière suivante :

$$F_{k,k'}(X) = Aff(Q_{k,k'}(\vec{a}, \tau),\ v_{k,k'},\ X),$$

avec $Aff(Q, v, X)$ la transformée affine de *X* définie par :

$$\forall x,\ Aff(Q, v, X)(x) = X(Q^{-1}(x - v))$$

avec *Q* une matrice 2x2 inversible et *v* un vecteur de translation, et

$$Q_{i,j}(\vec{a},\tau) \quad = \quad \pi_2 R_{\vec{a},\tau(t_j - t_i)}\pi_3,$$

où $\pi_2 = \begin{bmatrix} 1 & 0 & 0 \\ 0 & 1 & 0 \end{bmatrix}$ est la projection sur le plan XY, $\pi_3 = \begin{bmatrix} 1 & 0 \\ 0 & 1 \\ 0 & 0 \end{bmatrix}$, $\pi_3 x$ est la position dans le repère tridimensionnel XYZ d'un point $x$ d'une image en coupe, en confondant le plan support de l'image en coupe avec le plan XY, et on remarque que pour chaque possible direction $\vec{a}$ de l'axe de rotation, le signe de la vitesse angulaire $\tau$ est déterminé du sens connu (ou supposé) de rotation par rapport à la direction $\vec{a}$ de l'axe de rotation, par exemple d'après le réglage du système d'imagerie 10, par la relation suivante :

$$\tau = \begin{cases} |\tau| & \text{pour des rotations positives} \\ -|\tau| & \text{pour des rotations négatives} \end{cases},$$

(si le sens de rotation est choisi arbitrairement : dans ce cas, la représentation tridimensionnelle $V$ de l'objet $O$ sera au pire la représentation tridimensionnelle $V$ du miroir de l'objet $O$).

L'étape 314 de détermination de la direction $\vec{a}$ de l'axe de rotation $L$ comprend en outre une étape 322 de comparaison des valeurs $X_k(s)$ des pixels $s$ de chaque image en coupe $X_k$ avec les valeurs $X_k(x')$ des points $x'$ les plus proches des images en coupe spatialement voisines $X_{k'}$. De préférence, l'étape 322 de comparaison est réalisée par le calcul d'une distance $\chi(Aff(Q_{k,k'}, v_{k,k'}, X_k), X_{k'})$ entre la transformée affine $Aff(Q_{k,k'}, v_{k,k'}, X_k)$ de l'image en coupe $X_k$ et l'image en coupe voisine $X_{k'}$.

L'étape 314 de détermination de la direction $\vec{a}$ de l'axe de rotation $L$ comprend en outre une étape 324 de minimisation d'une fonction de coût $U$, dans laquelle les composantes de translation $v_{k,k'}$ ne sont pas exprimées en fonction des paramètres du mouvement, mais sont laissées comme variables de la fonction de coût $U$.

L'étape 324 de minimisation de la fonction de coût $U$ revient donc à trouver la direction $\vec{a}$ d'axe de rotation et la famille de composantes de translation $v_{k,k'}$ qui minimisent la fonction de coût $U$.

De préférence, la fonction de coût $U$ est donnée par la relation :

$$U(\vec{a},v) = \sum_k \sum_{k' \in N_k} \chi(Aff(Q_{k,k'}(\vec{a},\tau), v_{k,k'}, X_k), \ X_{k'}),$$

avec $N_k$ l'ensemble des indices des images en coupe voisines à l'image en coupe $X_k$, $\chi(Aff(Q_{k,k'}(\vec{a},\tau), v_{k,k'}, X_k), X_{k'})$ une mesure de la distance entre la transformée affine de l'image en coupe $X_k$ et l'image en coupe spatialement voisine $X_{k'}$.

Dans la définition précédente de la fonction de coût $U$, les composantes de translation $v_{k,k'}$ sont des variables indépendantes de $u_0$, $\vec{a}$, $\tau$, $T_1...T_m$.

*Détermination d'un point de passage de l'axe de rotation et de la suite de translations de perturbation*

La direction $\vec{a}$ de l'axe de rotation $L$ et des composantes de translation $v_{k,k'}$, appelées par la suite composantes de translation de référence $v_{k,k'}$, ayant été déterminées, l'étape 326 de détermination d'un point de passage $u_0$ de l'axe de rotation $L$ et de la suite de translations de perturbation $T_1...T_m$ comprend une étape 328 d'expression de composantes de translation $v_{k,k'}(u_0, \vec{a}, \tau, T_1...T_m)$ en fonction d'une suite de translations de perturbation $T_1...T_m$ et d'un point de passage $u_0$, la direction $\vec{a}$ de l'axe de rotation $L$ et la vitesse de rotation $\tau$ étant connues :

$$v_{k,k'}(u_0, \vec{a}, \tau, T_1...T_m) \quad = \quad (\pi_2 - \pi_2 R_{\vec{a},\tau(t_{k'} - t_k)})u_0 + \pi_2 \overline{T}_{k'} - \pi_2 R_{\vec{a},\tau(t_{k'} - t_k)}\overline{T}_k,$$

où $\overline{T}_k = R_{\vec{a},\tau(t_k - t_1)}T_1 + R_{\vec{a},\tau(t_k - t_2)}T_2 + \cdots + R_{\vec{a},\tau(t_k - t_{k-1})}T_{k-1} + T_k$, la translation cumulée depuis l'instant initial $t_0$ jusqu'à l'instant $t_k$ de prise de l'image en coupe $X_k$ avec $\overline{T}_0 = 0$.

L'étape 326 de détermination d'un point de passage $u_0$ de l'axe de rotation $L$ et de la suite de translations de

perturbation $T_1...T_m$ comprend en outre une étape 330 de détermination de la suite de translations de perturbation $T_1...T_m$ et du point de passage $u_0$, tels que les composantes de translation $v_{k,k'}(u_0, \vec{a}, \tau, T_1...T_m)$ approchent les composantes de translation de référence $v_{k,k'}$.

De préférence, l'étape 330 de détermination de la suite de translations de perturbation $T_1...T_m$ et du point de passage $u_0$ comprend une étape 332 de minimisation d'une fonction de coût $K$ qui comprend une première partie représentant, pour une suite de translations $T_1...T_m$ de perturbation et un point de passage $u_0$, une distance entre les composantes de translation $v_{k,k'}$ de référence et les composantes de translation $v_{k,k'}(u_0, \vec{a}, \tau, T_1...T_m)$ exprimées en fonction de la suite de translations de perturbation $T_1...T_m$ et du point de passage $u_0$.

De préférence également, la fonction de coût $K$ comprend une seconde partie représentant la régularisation Reg de la valeur $T_1...T_m$ de suite de translations de perturbation dont la minimisation réduit l'amplitude des translations $T_1...T_m$. La fonction de régularisation $Reg$ est de préférence une norme quadratique, par exemple donnée par la relation :

$$Reg(T_1...T_m) = \|T\|_M^2 \equiv T'MT,$$

avec $M$ une matrice symétrique et définie positive, et $T = T_1...T_m$ s'écrit sous la forme d'un vecteur colonne avec les translations $T_k$ les unes à la suite des autres. Par exemple, $M = I_{3m}$, la matrice identité $3m$x$3m$.

De préférence, la fonction de coût $K$ est donnée par la relation :

$$K(x_0, T_1...T_m) = \sum_k \sum_{k' \in N_k} \left\| v_{k,k'} - v_{k,k'}(\vec{a}, \tau, T_1...T_m, x_0) \right\|^2 + \alpha Reg(T_1...T_m),$$

avec $\alpha \geq 0$ un compromis entre l'écart quadratique entre $v_{k,k'}$ et $v_{k,k'}(u_0, \vec{a}, \tau, T_1...T_m)$, et la régularisation de $T_1...T_m$ pour contrôler l'amplitude des translations $T_1...T_m$.

### Troisième variante pour déterminer l'axe de rotation et la suite de translations de perturbation

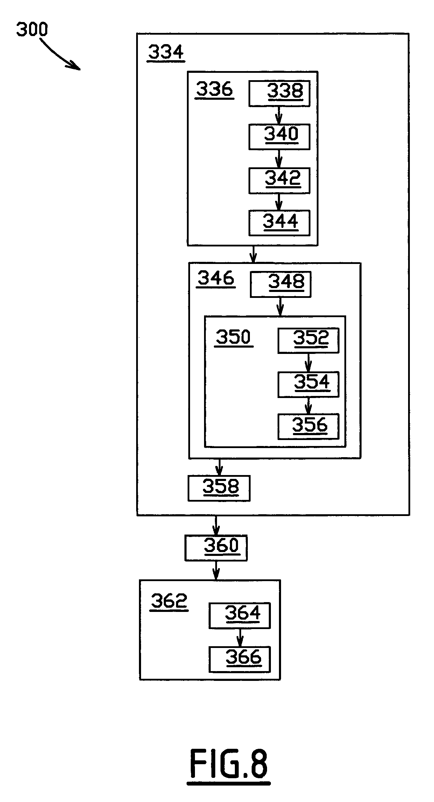

Une troisième variante de l'étape 300 de détermination de l'axe de rotation $L$ et de la suite de translations de perturbation $T_1...T_m$ est représentée sur la figure 8.

En référence à cette figure 8, l'étape 300 de détermination de l'axe de rotation $L$ et de la suite de translations de perturbation $T_1...T_m$ comprend une étape 334 de détermination de la direction $\vec{a}$ de l'axe de rotation $L$, au cours de laquelle les translations de perturbation $T_1...T_m$ sont considérées comme négligeables (ce qui signifie que le mouvement de l'objet $O$ est considéré comme une rotation stable autour de l'axe de rotation $L$),

#### Détermination de la direction de l'axe de rotation

L'étape 334 de détermination de la direction $\vec{a}$ comprend une étape 336 de détermination d'une projection $L_{XY}$ de l'axe de rotation $L$ sur le plan de coupe $P$, à partir des images en coupe $X_0...X_m$.

#### Détermination d'une projection de l'axe de rotation sur le plan de coupe

La méthode pour déterminer la projection $L_{XY}$ utilise le fait que chaque pixel $s$ et son point symétrique $L_{XY}(s)$ sur le plan de coupe $P$ par rapport à la projection $L_{XY}$, ont des histogrammes $h_s$ et $h_{L_{XY}(s)}$ qui sont proches. Ceci est du au fait que, au cours d'une rotation de l'objet $O$, le pixel $s$ et son point symétrique $L_{XY}(s)$ prennent sensiblement les mêmes valeurs, avec simplement un décalage temporel correspondant au temps que met le point $o$ de l'objet $O$ pour se déplacer du pixel $s$ à son point symétrique $L_{XY}(s)$.

Au cours de l'étape 336, la projection $L_{XY}$ de l'axe de rotation $L$ sur le plan de coupe $P$ est déterminée en choisissant la ligne $l_{XY}$ du plan de coupe $P$ ayant le niveau de symétrie d'histogrammes le plus élevé, c'est-à-dire, telle que les histogrammes $h_s$ et $h_{l_{XY}(s)}$ de chaque pixel $s$ et de son point symétrique $l_{XY}(s)$ soient proches.

Ainsi, l'étape 336 de détermination d'une projection $L_{XY}$ comprend, pour chaque pixel $s$ de la grille $G$, une étape de calcul 338 d'un histogramme $h_s$ des niveaux de gris que prend ce pixel $s$ dans au moins une partie des images en coupe $X_0,...,X_m$. L'histogramme $h_s$ représente le décompte des valeurs du pixel s, sans tenir compte de l'ordre dans lequel ces valeurs apparaissent dans la séquence d'images en coupe $X_0,...,X_m$.

De préférence, la partie d'images en coupe correspond aux images en coupe $X_0,...,X_{m'}$ (avec $m' \leq m$) acquises pendant que l'objet $O$ réalise un nombre entier de rotations autour de l'axe de rotation $L$. Cela se traduit par :

$$t_{m'} - t_0 \approx \frac{2\pi r}{|\tau|}$$

pour un nombre entier $r$.

L'étape 336 de détermination d'une projection $L_{XY}$ comprend en outre une étape 340 de détermination, pour chaque pixel $s$ de la grille $G$ et pour une ligne $l_{XY}$ du plan de coupe $P$, d'un histogramme $h_{l_{XY}(s)}$ des niveaux de gris que prend le point symétrique $l_{XY}(s)$ de ce pixel $s$ dans la partie précédente des images en coupe.

L'étape 336 de détermination d'une projection $L_{XY}$ comprend en outre une étape 342 de détermination des distances $\Delta(h_s, h_{l_{XY}(s)})$ entre l'histogramme $h_s$ de chaque pixel $s$ et l'histogramme $h_{l_{XY}(s)}$ du point symétrique $l_{XY}(s)$. La distance $\Delta$ est par exemple la distance de type Kolmogorov-Smirnov: $\Delta(h,h') = \sup_x |\bar{h}(x) - \bar{h}'(x)|,$ avec

$$\bar{h}(x) = \sum_{y \le x} h(y) .$$

L'étape 336 de détermination d'une projection $L_{XY}$ comprend en outre une étape 344 de minimisation d'une fonction de coût $\Psi$, qui représente, pour une ligne $l_{XY}$ du plan de coupe $P$, les différences entre l'histogramme $h_s$ de chaque pixel s et l'histogramme $h_{l_{XY}(s)}$ du point symétrique $l_{XY}(s)$ par rapport à la ligne $l_{XY}$. De préférence, la fonction de coût $\Psi$ est donnée par la relation :

$$\Psi(l_{XY}) = \sum_{s \in G} \Delta\left(h_s, h_{l_{XY}(s)}\right).$$

$L_{XY}$ est déterminé comme étant la ligne $l_{XY}$ sur le plan XY qui minimise la fonction de coût $\Psi$.

*Détermination de l'angle entre l'axe de rotation et sa projection*

L'étape 334 de détermination de la direction $\bar{a}$ comprend en outre une étape 346 de détermination de l'angle entre l'axe de rotation $L$ et sa projection $L_{XY}$ sur le plan de coupe $P$. Cet angle entre l'axe de rotation $L$ et sa projection $L_{XY}$ est déterminé en calculant l'angle $\phi$ entre l'axe Z du repère XYZ (perpendiculaire au plan de coupe $P$) et l'axe de rotation $L$.

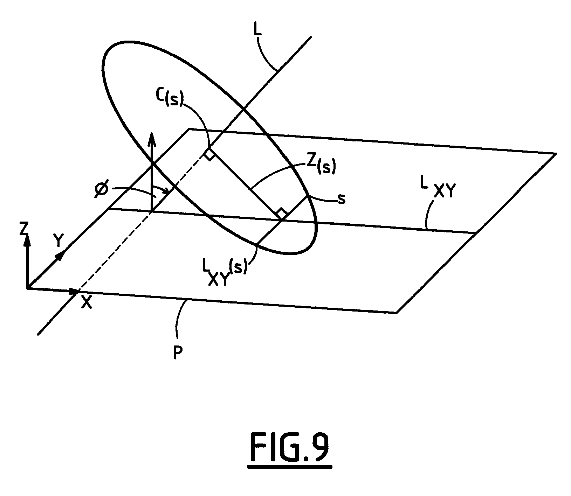

En référence à la figure 9, l'étape 346 de détermination de l'angle $\phi$ utilise le fait que des points $o$ de l'objet $O$ décrivent, au cours du temps, un cercle respectif, centré sensiblement sur l'axe de rotation $L$, ce cercle coupant le plan de coupe $P$, d'une part, en un pixel $s$ et, d'autre part, en son point symétrique $L_{XY}(s)$ par rapport à la projection $L_{XY}$.

De retour à la figure 8, l'étape 346 de détermination de l'angle $\phi$ comprend une étape 348 de détermination, pour chaque pixel $s$ de la grille $G$, d'un temps $t(s)$, dit temps de symétrisation. Le temps de symétrisation $t(s)$ d'un pixel $s$ est le temps nécessaire à un point $o$ de l'objet $O$ pour se déplacer depuis ce pixel $s$ jusqu'au point symétrique $L_{XY}(s)$ par rapport à la projection $L_{XY}$.

Cela se traduit par le fait que la valeur $X_k(s)$ d'un pixel $s$ sur une image en coupe $X_k$ prise à un instant $t_k$ est sensiblement égale à la valeur $X_{k'}(L_{XY}(s))$ du point symétrique $L_{XY}(s)$ sur une image en coupe $X_{k'}$ prise à un instant $t_{k'}$ décalé sensiblement du temps de symétrisation $t(s)$ par rapport à l'instant de prise $t_k$.

Ainsi, le temps de symétrisation $t(s)$ est de préférence déterminé en déterminant le meilleur recalage temporel entre les deux vecteurs $(X_0(s), X_1(s),...,X_m(s))$ et $(X_0(L_{XY}(s)), X_1(L_{XY}(s)),...,X_m(L_{XY}(s)))$. Ainsi, le vecteur recalé de temps $\mu$ du vecteur $(X_0(L_{XY}(s)), X_1(L_{XY}(s)),...,X_m(L_{XY}(s)))$ est défini par $v(\mu) = (X_{q(t_0+\mu)}(L_{XY}(s)), X_{q(t_1+\mu)}(L_{XY}(s)),..., X_{q(t_{j(\mu)}+\mu)}(L_{XY}(s)))$, avec $j(\mu)$ tel que $j(\mu)+1$ soit le nombre d'images prises entre l'instant $t_0$ et l'instant $t_m$ - $\mu$, et $q(t)$ tel que l'instant de prise $t_{q(t)}$ soit l'instant le plus proche de l'instant $t$ parmi tous les instants de prise d'images en coupe. De préférence, l'erreur de recalage est donnée par

$$Err(\mu) = \kappa\left((X_0(s), X_1(s),..., X_{j(\mu)}(s)),\ \ v(\mu)\right),$$

avec $\kappa(u,v)$ une mesure de distance entre deux vecteurs $u$ et $v$, $\kappa$ est choisi par exemple comme étant une distance

quadratique normalisée : $\kappa(u,v) = \dfrac{1}{l}\sum_i (u_i - v_i)^2$ avec $l$ la longueur des vecteurs. Ainsi $t(s)$ est obtenu en minimisant l'erreur de recalage $Err(\mu)$ :

$$t(s) = \arg\min_{0 \le \mu < p} Err(\mu),$$

avec $p = 2\pi/|\tau|$ la période de révolution.

L'étape 346 de détermination de l'angle $\phi$ comprend en outre une étape 350 de détermination de l'angle $\phi$ à partir des temps de symétrisation $t(s)$.

L'étape 350 de détermination de l'angle $\phi$ à partir des temps de symétrisation $t(s)$ comprend une étape 352 de détermination d'une direction $\vec{b}$ de la projection $L_{XY}$, avec $||b|| = 1$, ainsi que d'un point de passage $y_0$ de la projection $L_{XY}$. La projection $L_{XY}$ est déterminée par sa direction et le point de passage $(y_0, \vec{b})$. La direction $\vec{b}$ de la projection $L_{XY}$ est choisie comme étant, à une constante positive multicative près, la projection sur le plan XY de la direction de l'axe de rotation $\vec{a}$ que l'on détermine par la suite :

$$\vec{b} = \pi_{XY}(\vec{a})/\|\pi_{XY}(\vec{a})\|,$$

avec $\pi_{XY} = \begin{bmatrix} 1 & 0 & 0 \\ 0 & 1 & 0 \\ 0 & 0 & 0 \end{bmatrix}$ la matrice de projection sur le plan XY. Ainsi on suppose que le sens de rotation de l'objet $O$ par rapport à la direction de l'axe de rotation $\vec{a}$ qui est déterminé par la suite, est connu (ou supposé), par exemple selon le réglage du système de l'imagerie 10, une fois la direction $\vec{b}$ choisie (telle que $b = \pi_{XY}(a)/\|\pi_{XY}(a)\|$). Ainsi on détermine la vitesse angulaire $\tau$ de rotation :

$$\tau = \begin{cases} |\tau| & \text{pour des rotations positives} \\ -|\tau| & \text{pour des rotations négatives} \end{cases}.$$

Si le sens de rotation de l'objet est inconnu, il est choisi arbitrairement : dans ce cas, la représentation tridimensionnelle $V$ de l'objet $O$ sera au pire la représentation tridimensionnelle $V$ du miroir de l'objet $O$.

L'étape 350 de détermination de l'angle $\phi$ à partir des temps de symétrisation $t(s)$ comprend en outre une étape 354 de détermination, pour chaque pixel $s$, d'une distance $z(s)$ entre, d'une part, le milieu $\dfrac{s + L_{XY}(s)}{2}$ du segment entre le pixel $s$ et son symétrique $L_{XY}(s)$ par rapport à la projection $L_{XY}$, et, d'autre part, le centre $c(s)$ du cercle autour duquel tourne un point $o$ de l'objet $O$ passant par le pixel $s$. Cette distance est positive si le centre $c(s)$ est au dessus du plan XY, elle est nulle si $c(s)$ est dans le plan XY, et négative sinon.

De préférence, la distance $z(s)$ est donnée par la relation :

$$z(s) = d(s)\dfrac{\| s - L_{XY}(s)\|}{2\tan(\dfrac{t(s)\tau}{2})},$$

avec $t(s)\tau$ l'angle de l'arc du cercle depuis $s$ jusqu'au point symétrique $L_{XY}(s)$ suivant le sens de rotation,

$$d(s) = \begin{cases} 1 & si \; s \in P^R \\ -1 & si \; s \in P^L \end{cases}$$

, , $P^R$ et $P^L$ étant les deux demi-plans du plan de coupe $P$ séparés par la projection $L_{XY}$, $P^R$ et $P^L$ sont définis par :

$$P^L \quad = \quad \{s \in P : <\vec{b} \wedge (s - y_0), \vec{e}_3> \; \geq 0\}$$

$$P^R \quad = \quad \{s \in P : <\vec{b} \wedge (s - y_0), \vec{e}_3> \; < 0\},$$

avec $\wedge$ le produit vectoriel, $<.,.>$ le produit scalaire, et $\vec{e}_3 = \begin{bmatrix} 0 \\ 0 \\ 1 \end{bmatrix}$ la direction de l'axe Z du repère. $P^R$ et $P^L$ ne dépendent pas de la position de $y_0$ sur la projection $L_{XY}$.

En théorie, il y a une relation affine entre la distance $z(s)$ et la position sur projection $L_{XY}$ de l'axe de rotation, du point $\dfrac{s + L_{XY}(s)}{2}$ (qui est aussi la projection de s sur la projection $L_{XY}$ de l'axe de rotation) par rapport au point $y_0$ :

$$z(s) = <s - y_0, \vec{b}> \cos\phi + z_0,$$

avec $z_0 \geq 0$ si la projection du point $y_0$ sur l'axe de rotation $L$ est au dessus du plan XY ou dans le plan XY et $z_0 < 0$ sinon, et $|z_0|$ est la distance entre $y_0$ et l'axe de rotation $L$.

Ainsi, de préférence, l'étape 350 de détermination de l'angle $\phi$ à partir des temps de symétrisation $t(s)$ comprend en outre une étape 356 de détermination de l'angle $\phi$ par la régression de la relation affine précédente :

$$(\phi, z_0) = \arg\min_{\hat{\phi}, \hat{z}_0} \sum_{s \in G_{\delta, \sigma_{min}}} \left( z(s) - <s - \hat{y}_0, \vec{b}> \cos\hat{\phi} - \hat{z}_0 \right)^2 ,$$

avec $G_{\delta, \sigma_{min}}$ l'ensemble des pixels $s$ de la grille $G$ dont la distance par rapport à la projection $L_{XY}$ de l'axe de rotation dépasse un certain seuil $\delta$ et tel que la variance empirique des niveaux de gris que prend le pixel $s$ dans la séquence d'images en coupe $X_0,...,X_m$ dépasse un certain seuil $\sigma_{min}^2$ .

En pratique, $\delta$ est choisi entre 4 et 20 pixels, $\sigma_{min}^2$ est par exemple le $q$-quantile des variances empiriques des niveaux de gris, calculées pour chaque pixel $s$ de la grille $G$, que prend le pixel $s$ dans la séquence d'images en coupe $X_0,...,X_m$ (ce qui signifie que la proportion des pixels s de la grille $G$, où la variance empirique calculée des niveaux de gris est inférieure ou égale à $\sigma_{min}^2$ , est sensiblement égale à q), q vaut entre 60% et 95% en général.

Le fait de limiter la régression précédente aux pixels dans $G_{\delta, \sigma_{min}}$ permet d'améliorer la robustesse de l'estimation en n'utilisant que les temps de symétrisation pour les pixels dans $G_{\delta, \sigma_{min}}$ qui sont en général plus fiables.

L'étape 334 de détermination de la direction $\vec{a}$ comprend en outre une étape 358 de détermination de la direction $\vec{a}$, à partir de la projection $L_{XY}$ et de l'angle $\phi$. La direction $\vec{a}$ de l'axe de rotation $\underline{L}$ est par exemple donnée par le vecteur de coordonnées sphériques $(1, \theta, \phi)$, avec $\theta$ l'angle entre l'axe X et la direction $\vec{b}$ de la projection $L_{XY}$, tel que $\vec{b} = \pi_{XY}(\vec{a})$ $/\|\pi_{XY}(\vec{a})\|$.

*Détermination optionnelle du point de passage de l'axe de rotation*

En complément optionnel, l'étape 300 de détermination de l'axe de rotation *L* et de la suite de translations de perturbation $T_1...T_m$ comprend en outre une étape 360 de détermination d'un point de passage $u_0$ de l'axe de rotation *L*, à partir du ou des temps de symétrisation $t(s)$. De préférence, le point de passage $u_0$ choisi comme étant le point d'intersection entre l'axe de rotation *L* et la droite perpendiculaire au plan XY et passant par le point $y_0$. Le point de passage $u_0$ est dans ce cas donné par la relation suivante :

$$u_0 = y_0 + \frac{z_0}{\sin \phi} \vec{e}_3 \, ,$$

*Détermination de la suite de translations de perturbation*

L'étape 300 de détermination de l'axe de rotation *L* et de la suite de translations de perturbation $T_1...T_m$ comprend en outre une étape 362 de détermination de la suite de translations de perturbation $T_1...T_m$, réalisée de la même manière qu'à l'étape 330.

Plus précisément, l'étape 362 de détermination de la suite de translations de perturbation $T_1...T_m$ comprend une étape 364 de détermination, de la même manière qu'à l'étape 324, des vecteurs de translation de référence $v_{k,k'}$ des transformations affines $F_{k,k'}$, dont les valeurs minimisent la fonction de coût *U*, avec la direction $\vec{a}$ de l'axe de rotation *L* et la vitesse angulaire $\tau$ connues.

Grâce à la connaissance de la direction $\vec{a}$ de l'axe de rotation, la minimisation de *U* est largement simplifiée, en minimisant indépendamment chaque terme $\chi(Aff(Q_{k,k'}(\vec{a},\tau),v_{k,k'},X_k), X_k)$, pour déterminer individuellement chaque vecteur de translation de référence $v_{k,k'}$.

L'étape 362 de détermination de la suite de translations de perturbation $T_1...T_m$ comprend en outre une étape 366 de détermination de la suite de translations de perturbation $T_1...T_m$ et du point de passage $u_0$ ayant les valeurs qui minimisent la fonction de coût *K* de l'étape 332, connaissant les vecteurs de translation de référence $v_{k,k'}$.

En variante, lorsque l'étape optionnelle 360 est réalisée, la minimisation de la fonction de coût *K* est simplifiée en utilisant le point de passage $u_0$ déterminé à cette étape. Par ailleurs, l'étape 366 revient à déterminer la suite de translations de perturbation $T_1...T_m$ ayant la valeur qui minimise la fonction de coût *K*, le point de passage $u_0$ étant connu.

*Détermination **d'une** représentation tridimensionnelle de **l'objet***

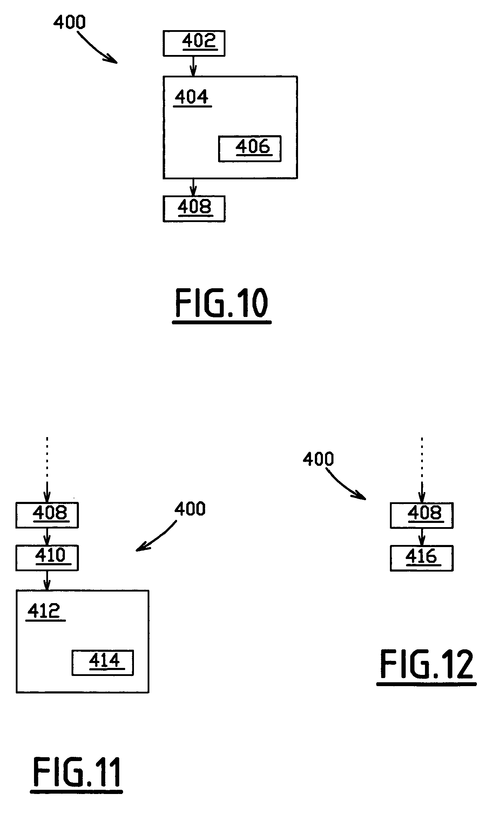

En référence à la figure 10, l'étape 400 de détermination de la représentation tridimensionnelle *V* de l'objet *O* comprend une étape 402 de détermination d'un volume *D*, inclus dans le volume *U* de la chambre 20, sur lequel sera « reconstruit » l'objet *O*. Le volume *D* comprend l'objet *O* (au moins en partie) et son environnement proche. Par exemple, le volume *D* est un parallélépipède.

L'étape 400 de détermination de la représentation tridimensionnelle *V* de l'objet *O* comprend en outre une étape 404 de détermination d'un ensemble $\Omega$ de points *u* du volume *D* et d'une valeur $X(u)$ de chacun de ces points *u* à un instant de référence. Dans la suite, l'instant initial $t_0$ sera choisi comme instant de référence. L'ensemble $\Omega$ de points *u* comprend en particulier des points *o* de l'objet *O* dans sa position $O_0$ à l'instant initial $t_0$.

On remarquera que, dans une implémentation très simple, l'ensemble $\Omega$ de points *u* forme déjà une représentation tridimensionnelle de l'objet, cette dernière étant donnée par la constellation des points de l'ensemble $\Omega$.

L'étape 404 de détermination de l'ensemble de points $\Omega$ est réalisée à partir des positions de l'objet *O* par rapport au plan de coupe *P* à chaque instant de prise de vue $t_0...t_m$, et de la séquence d'images en coupe $X_0...X_m$.

Plus précisément, l'étape 404 de détermination de l'ensemble de points $\Omega$ comprend une étape 406 de calcul, pour chaque image en coupe $X_k$, de la position $C_k(s)$ de chaque pixel *s* de l'image en coupe $X_k$ à l'instant initial $t_0$, en supposant que ce pixel appartient à l'objet *O*. Le calcul est réalisé à partir des paramètres du mouvement de l'objet *O* (vitesse angulaire $\tau$, axe de rotation *L*, suite de translations de perturbation $T_1...T_m$) déterminés précédemment. La position $C_k(s)$ de chaque point *u* de l'ensemble $\Omega$ est donné d'un pixel *s* d'origine respectif d'une image $X_k$, par :

$$C_k(s) = R^t_{\vec{a},\tau(t_k - t_0)}(\pi_3 s - u_0 - \overline{T}_k) + u_0$$

avec $\overline{T}_k = R_{\vec{a},\tau(t_k-t_1)} T_1 + R_{\vec{a},\tau(t_k-t_2)} T_2 + ... + R_{\vec{a},\tau(t_k-t_{k-1})} T_{k-1} + T_k$, avec $\overline{T}_0 = 0$, est la matrice transposée de $R_{\vec{a},\tau(t_k-t_0)}$. L'ensemble $\Omega$ est constitué des points *u* du volume *D* de position $C_k(s)$ pour chaque pixel *s* et chaque image en coupe $X_k$. On dit

ainsi que $s$ et $X_k$ sont respectivement le pixel et l'image d'origine du point $u$. On remarque que $C_k(s)$ est aussi la position dans le repère de l'objet $O$ choisi du pixel $s$ du plan de coupe à l'instant de prise $t_k$ de l'image en coupe $X_k$.

Chacun des points $u$ de l'ensemble $\Omega$ est associé à la valeur $X_k(s)$ du pixel s d'origine de l'image en coupe d'origine $X_k$ : $X(u) = X_k(s)$.

On remarquera que l'ensemble $\Omega$ peut ainsi comprendre plusieurs fois un même point $u$, chaque fois associé avec une valeur respective, ces différentes valeurs provenant de différentes images en coupe. L'étape 400 de détermination de la représentation tridimensionnelle $V$ de l'objet $O$ comprend en outre une étape 408 de choix d'une fonction de représentation tridimensionnelle $V_\beta$ paramétrable avec des paramètres $\beta$, et d'une opération $Op$ donnant, à partir de la fonction de représentation tridimensionnelle $V_\beta$, une fonction d'estimation $\tilde{X} = Op(V_\beta)$ de la valeur de chaque point $u$ de l'ensemble $\Omega$

Une fois les paramètres $\beta$ déterminés, la représentation tridimensionnelle $V$ est donnée par la fonction de représentation tridimensionnelle $V_\beta$, de préférence en tout point du volume $D$.

*Première variante de fonction de représentation tridimensionnelle $V_\beta$*

En référence à la figure 11, dans une première variante, la fonction de représentation tridimensionnelle $V_\beta$, choisie au cours de l'étape 408, est une décomposition en fonctions B-spline de degré $r$ avec des noeuds $w$ espacés de manière égale dans l'espace :

$$w = b + (a_1 k_1, a_2 k_2, a_3 k_3),$$

avec $b \in R^3$, et $a_1$, $a_2$ et $a_3$ respectivement le pas d'échantillonnage dans les directions X, Y, et Z, et $k_1$, $k_2$, $k_3$ des nombres entiers. Chaque paramètre de la fonction de représentation tridimensionnelle $V_\beta$ est associé à un noeud respectif.

La fonction de représentation tridimensionnelle $V_\beta$ s'écrit alors :

$$\forall u = (u_1, u_2, u_3) \in D,$$

$$V(u) = \sum_{w=(w_1,w_2,w_3)\in W} \eta(\frac{u_1 - w_1}{a_1})\eta(\frac{u_2 - w_2}{a_2})\eta(\frac{u_3 - w_3}{a_3})\beta(w),$$

avec $\eta$ la fonction B-spline centrale de degrés $r$ définie sur l'ensemble des nombres réels R, $W$ l'ensemble des noeuds dans le volume $D$. $\eta$ est par exemple la fonction indicatrice sur l'intervalle $\left[-\frac{1}{2},\frac{1}{2}\right]$, convoluée $r$ fois avec elle-même:

$$\eta(x) = \underbrace{1_{[-\frac{1}{2},\frac{1}{2}]} * 1_{[-\frac{1}{2},\frac{1}{2}]} * \ldots * 1_{[-\frac{1}{2},\frac{1}{2}]}}_{r+1 \; fois}(x).$$

En particulier, si $r$ = 3 (fonction B-spline cubique) :

$$\eta(x) = \begin{cases} \dfrac{2}{3} - x^2 + \dfrac{|x|^3}{2}, & \textit{if } 0 \leq |x| < 1 \\[2mm] \dfrac{(2-|x|)^3}{6}, & \textit{if } 1 \leq |x| < 2. \\[2mm] 0, & \textit{if } |x| \geq 2 \end{cases}$$

Dans cette première variante, l'opération *Op* est choisie comme la fonction identité, de sorte que la fonction d'estimation $\tilde{X}$ de la valeur de chaque point *u* de l'ensemble $\Omega$ est égale à la fonction de représentation tridimensionnelle $V_\beta$ : $\tilde{X}(u) = V_\beta(u)$.

Avec ce choix de fonction de représentation tridimensionnelle $V_\beta$, l'étape 400 de détermination de la représentation tridimensionnelle *V* de l'objet *O* comprend en outre une étape 410 de division du volume *D* en une pluralité de sous volumes $D_i$, disjoints les uns des autres. En variante, les bords des sous volumes $D_i$ se chevauchent. De cette manière, les noeuds *w* sont également divisés en groupes $\{w\}_i$ chacun associé à un sous volume $D_i$ respectif. De même, les points de l'ensemble $\Omega$ sont divisés en groupes $\Omega_i$ chacun associé à un sous volume $D_i$ respectif.

Plus précisément, chaque groupe $\{w\}_i$ comprend les noeuds situés dans le sous volume respectif $D_i$ et les paramètre $\{\beta\}_i$ de ces noeuds $\{w\}_i$ sont ainsi associés au sous volume $D_i$. De même, les points de chaque groupe $\Omega_i$, sont les points de l'ensemble $\Omega$ situés dans le sous volume $D_i$.

L'étape 400 de détermination de la représentation tridimensionnelle *V* de l'objet *O* comprend en outre une étape 412 de détermination des paramètres $\beta$, tels que, pour chaque point *u* de l'ensemble $\Omega$, l'estimation $\tilde{X}(u)$ de la valeur du point u donne sensiblement la valeur $X(u)$ du point *u*.

Plus précisément, l'étape 412 de détermination des paramètres $\beta$ comprend, pour chaque sous volume $D_i$, une étape 414 de détermination des paramètres $\{\beta\}_i$ associés à ce sous volume $D_i$, tels que, pour chaque point *u* du groupe $\Omega_i$ et des groupes directement contiguës au groupe $\Omega_i$, l'estimation $\tilde{X}(u)$ de la valeur du point *u* donne sensiblement la valeur $X(u)$ du point *u*, les paramètres $\{\beta\}_{j \neq i}$ associés aux autres sous-ensemble $D_{j \neq i}$ étant fixés à une valeur donnée.

L'étape 414 de détermination des paramètres $\{\beta\}_i$ est mise en oeuvre plusieurs fois, de manière itérative, en balayant à chaque fois tous les sous volumes $D_i$ : au cours de la première itération, on détermine successivement chaque groupe de paramètres $\{\beta\}_i$ (pour la détermination d'un groupe de paramètre $\{\beta\}_i$ la valeur donnée de chacun des autres groupes de paramètre $\{\beta\}_{j \neq i}$ est fixée à une valeur prédéterminée, par exemple nulle) ; au cours des itérations ultérieures, on détermine successivement chaque groupe de paramètres $\{\beta\}_i$ (pour la détermination d'un groupe de paramètre $\{\beta\}_i$, la valeur donnée de chacun des autres groupes de paramètre $\{\beta\}_{j \neq i}$ est le dernier résultat déterminé auparavant).

De préférence, les paramètres $\{\beta\}_i$ sont déterminés en minimisant la fonction de coût suivante :

$$U(\beta) = \sum_{u \in \Omega} (\tilde{X}(u) - X(u))^2 + \lambda \beta' A\beta,$$

*A* est une matrice symétrique définie positive, ou de manière plus générale semi définie positive, $\beta^t A\beta$ est une mesure de l'irrégularité quadratique, et $\lambda > 0$ est un compromis entre l'adéquation de la fonction de représentation tridimensionnelle et la régularité.

*Seconde variante de fonction de représentation tridimensionnelle $V_\beta$*

En référence à la figure 12, la fonction de représentation tridimensionnelle $V_\beta$, choisie au cours de l'étape 408, s'écrit sous la forme d'une décomposition en fonctions radiales de base (« Radial Basis Function » ou RBF) $\phi$ avec les noeuds *w*:

$$\forall u \in D, V_\beta(u) = \sum_{w \in W} \phi(u - w)\beta(w),$$

avec *W* l'ensemble des noeuds dans le volume *D*.

La fonction $\phi(u - w)$ dépend de la distance entre le point *u* et le noeud *w*, mais pas de la direction entre le point

$u$ et le nœud $w$. Par exemple, $\phi(x) = \exp(-c\|x\|^2)$ ou $\phi(x) = \eta(\|x\|)$ avec $\eta$ la fonction B-spline centrale cubique.

En outre, l'opération $Op$ donne une fonction d'estimation $\tilde{X} = Op(V_\beta, f_R)$ de la valeur de chaque point $u$ de l'ensemble $\Omega$ à partir de la fonction de représentation tridimensionnelle $V_\beta$ et d'une fonction d'étalement du point $f_R$. Dans l'exemple décrit, l'opération $Op$ est une convolution de la fonction de représentation tridimensionnelle $V_\beta$ avec la fonction d'étalement du point $f_R$ suivante : $f_R(u) = f(Ru)$, avec $f$ la fonction d'étalement du point sans rotation, qui est connue (par exemple, donnée par le constructeur du système d'imagerie, ou déterminée expérimentalement), $f_R$ la fonction d'étalement du point pour la rotation $R$, et $Ru$ le point résultant de la rotation du point $u$ par la rotation $R$.

La fonction d'étalement du point $f_R$ dépend de la rotation $R$ entre la position de l'objet $O$ à l'instant $t_k$ de prise de l'image en coupe $X_k$ respective associée au point $u$, et la position de l'objet $O$ à l'instant de référence $t_0$ : $R = R_{\overrightarrow{a},\tau(t_k-t_0)}$. Ainsi, pour chaque point u de l'ensemble $\Omega$,

$$\tilde{X}(u) = Op(V_\beta, f_R)(u) = (V_\beta * f_R)(C_k(s)),$$

avec $*$ l'opération de convolution, le pixel $s$ et l'image en coupe $X_k$ (de l'instant de prise $t_k$) étant respectivement le pixel et l'image d'origine du point $u$.

Du fait du choix de fonctions radiales de base $\phi$, on obtient la propriété que, pour chaque point $u$ du volume $D$ :

$$Op(\phi, f_R)(u) = Op(\phi, f)(Ru),$$

soit :

$$(\phi * f_R)(u) = (\phi * f)(Ru)$$

avec $*$ l'opération de convolution, $R$ une rotation quelconque.

Ainsi, L'étape 400 de détermination de la représentation tridimensionnelle $V$ de l'objet $O$ comprend en outre une étape 416 de détermination des paramètres $\beta$ de la fonction de représentation tridimensionnelle $V_\beta$ en minimisant la fonction de coût suivante :

$$E(\beta) = \sum_{u \in \Omega}\left( X(u) - \sum_{w \in W}(\phi * f)(\pi_3 s - \varsigma_i - R_i w)\beta(w) \right)^2 + \lambda\beta' A\beta,$$

où $s$ et l'image en coupe $X_i$ (de l'instant de prise $t_i$) sont respectivement le pixel et l'image d'origine du point $u$, $R_i = R_{\overrightarrow{a},\tau(t_i-t_0)}$ et $\zeta_i = \overline{T}_i + u_0 - R_{\overrightarrow{a},\tau(t_i-t_0)}u_0$.

De façon avantageuse, cette minimisation est réalisée en calculant une unique convolution (la convolution $\phi * f$) et en résolvant le système linéaire, qui découle du calcul de la convolution $\phi * f$, sur les paramètres $\beta$. Les paramètres $\beta$ sont ainsi déterminés facilement.

**Variante de détermination de l'ensemble $\Omega$**

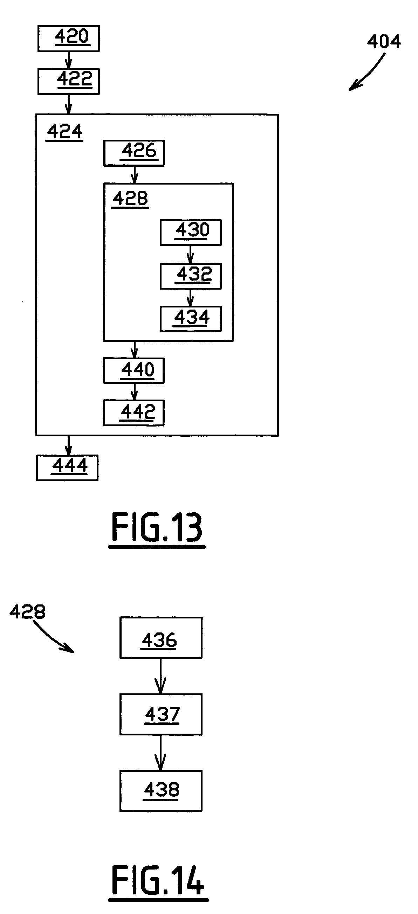

La figure 13 illustre une variante de réalisation de l'étape 404 de détermination d'un ensemble $\Omega$ de points $u$ du volume $D$ et d'une valeur $X(u)$ de chacun de ces points $u$ à un instant de référence, afin de déterminer l'ensemble de points $\Omega$ à partir de plusieurs séquences d'images en coupe, notées $S_l$ avec $l = 1...l$. Chaque séquence $S_l$ est composée des images en coupes $X_0^l, X_1^l, \ldots, X_{m_l}^l$, à des instants de prises de vue $t_0^l$, $t_1^l$, $\ldots$, $t_{m_l}^l$ respectifs.

Dans cette variante, l'étape 404 de détermination de l'ensemble de points $\Omega$ comprend une étape 420 de détermination d'une fonction de représentation tridimensionnelle $V_l$, sur un sous volume respectif $D_l$, pour chaque séquence $S_l$. Cette étape 420 est par exemple mise en oeuvre suivant les étapes 408 à 416 précédentes pour chaque séquence $S_l$.

Chaque fonction de représentation tridimensionnelle $V_l$ donne une représentation de l'objet $O$ dans une position

respective, notée $O_l$.

L'étape 404 de détermination de l'ensemble de points Ω comprend en outre une étape 422 de discrétisation de chaque sous volume $D_l$ suivant une grille tridimensionnelle $G_3$. On obtient ainsi, pour chaque séquence $S_l$, un sous volume discrétisé $\tilde{D}_l$, regroupant les points du sous volume $D_l$ situés sur la grille tridimensionnelle $G_3$. On obtient ainsi : $\forall u \in \tilde{D}_l, \tilde{V}_l(u) = V_l(u)$.

De préférence, la grille tridimensionnelle $G_3$ a un pas qui est inférieur ou égal à celui de la grille $G$ du plan de coupe $P$.

L'étape 404 de détermination de l'ensemble de points Ω comprend en outre une étape 424 de détermination, pour chaque séquence $S_l$, d'une rotation $Q_l$ et d'une translation $h_l$ permettant de sensiblement placer toutes les positions $O_l$ des représentations de l'objet $O$ dans une même position de référence.

De préférence, la position de référence est celle d'une des séquences $S_l$. Dans la suite, la position $O_1$ de l'objet de la première séquence $S_1$ sera la position de référence. Ainsi, un point $o$ de l'objet $O$ de la position $u$ dans $O_1$ est à la position $Q_l u + h_l$ dans $O_l$, avec $l \neq 1$.

L'étape 424 de détermination, pour chaque séquence $S_l$, d'une rotation $Q_l$ et d'une translation $h_l$ comprend une étape 426 de détermination d'un niveau de quantile q, tel que sensiblement les points lumineux de l'objet $O$ aient des valeurs $\tilde{V}_l(u)$ supérieures ou égales au $q$-quantile $\rho_l(q)$, pour chaque sous ensemble discrétisé $D_l$. Par exemple, le niveau de quantile $q$ est pris entre 60% et 95%.

L'étape 424 de détermination, pour chaque séquence $S_l$, d'une rotation $Q_l$ et d'une translation $h_l$, comprend en outre une étape 428 de sélection d'au moins trois groupes $g_1 \ldots g_k$, de préférence quatre ou plus, de points du sous ensemble discrétisé $\tilde{D}_l$, selon un critère de sélection. Le critère de sélection est le même pour toutes les séquences $S_l$. Le critère de sélection s'applique en particulier sur la valeur des points du sous ensemble discrétisé $\tilde{D}_l$.

En appliquant ainsi le même critère de sélection pour toutes les séquences $S_1$, il est possible d'obtenir sensiblement les mêmes points de l'objet $O$ pour toutes les séquences $S_l$, même si ces points n'ont pas la même position pour les différentes séquences $S_l$.

Dans une première variante représentée sur la figure 13, l'étape 428 de sélection des groupes $g_1 \ldots g_k$, comprend une étape 430 de sélection d'un même nombre $n$ des points les plus lumineux (ayant les valeurs les plus élevées). De préférence, le nombre $n$ est l'entier le plus proche de $\min(qn_1, \ldots, qn_l)$ ($q$ est exprimé en tant que pourcentage), avec $n_1, \ldots, n_1$ les nombres de points dans les sous ensemble discrétisés $\tilde{D}_1 \ldots \tilde{D}_l$.

L'étape 428 de sélection des groupes $g_1 \ldots g_k$ comprend en outre une étape 432 de classement, pour chaque séquence $S_l$, des $n$ points les plus lumineux (sélectionnés précédemment) suivant leur valeur, dans l'ordre décroissant par exemple.

L'étape 428 de sélection des groupes $g_1 \ldots g_k$ comprend en outre une étape 434 de division des $n$ points les plus lumineux classés en $k$ groupes $g_1 \ldots g_k$ de taille sensiblement égale : les points du groupe $g_1$ sont plus lumineux que ceux du groupe $g_2$, qui sont plus lumineux que ceux de $g_3$, etc.

Dans une seconde variante représentée sur la figure 14, l'étape 428 de sélection des groupes $g_1 \ldots g_k$, comprend une étape de calcul 436, pour chaque séquence $S_l$, du barycentre $b_1$ des points $u$ du sous ensemble $\tilde{D}_l$, dont les valeurs sont supérieures au $q$-quantile $\rho_l(q)$. L'ensemble de ces points sera noté par la suite $\tilde{D}_{l,q}$. Pour le calcul du barycentre $b_l$, tous les points ont la même pondération.

L'étape 428 de sélection des groupes $g_1 \ldots g_k$, comprend en outre une étape 437 de détermination de la distance la plus élevée entre le barycentre et les points de tous les ensembles $\tilde{D}_{l,q}$. Cette distance sera appelée par la suite rayon $r$.

De préférence, le rayon $r$ est donné par :

$$ r = \min\left(\max\{\|u - b_1\| : u \in \tilde{D}_{1,q}\}, \ldots, \max\{\|u - b_I\| : u \in \tilde{D}_{I,q}\}\right) $$

L'étape 428 de sélection des groupes $g_1 \ldots g_k$, comprend en outre une étape 438 de division du rayon r (c'est-à-dire du segment $[0,r]$) en $k$ segments de tailles égales ($seg_i = [(k-i)r/k, (k-i+1)r/k]$, avec $1 \leq i \leq k$), chaque groupe $g_1 \ldots g_k$ étant associé à un segment respectif.

Plus précisément, pour chaque séquence $S_l$, chaque groupe $g_i$ comprend les points $u$ de $\tilde{D}_{l,q}$ dont la distance au barycentre $b_l$ est comprise dans le segment $seg_i$ associé.

De retour à la figure 13, l'étape 424 de détermination, pour chaque séquence $S_l$, d'une rotation $Q_l$ et d'une translation $h_l$ comprend en outre une étape 440 de détermination, pour chaque séquence $S_l$, du barycentre $\omega_{l,i}$ des points $u$ de chacun des groupes $g_i$. Pour le calcul des barycentres $\omega_{l,i}$, les points ont des pondérations identiques.

L'étape 424 de détermination, pour chaque séquence $S_l$, d'une rotation $Q_l$ et d'une translation $h_l$ comprend en outre une étape 442 de détermination de la rotation $Q_l$ et de la translation $h_l$ à partir des barycentres $\omega_{l,i}$.

De préférence, les rotations $Q_l$ et les translations $h_l$ sont déterminées par la minimisation d'une fonction de coût :

$$(Q_l, h_l) = \arg \min_{Q \in O(3), h \in \mathbf{R}^3} \sum_{i=1}^{k} \| Q\omega_{1,i} + h - \omega_{l,i} \|^2,$$

avec O(3) l'ensemble des matrices orthogonales 3-par-3.

De préférence, la solution de la minimisation précédente est obtenue en calculant :

$$\begin{cases} Q_l = P_l P_1' \\ h_l = \overline{\omega}_l - Q_l \overline{\omega}_1 \end{cases}.$$

avec $\overline{\omega}_1 = \dfrac{1}{k} \sum_{i=1}^{k} \omega_{1,i}$ et $\overline{\omega}_l = \dfrac{1}{k} \sum_{i=1}^{k} \omega_{l,i}$, et $P_1$ et $P_l$ obtenues par décomposition de valeurs singulières ("singular value décomposition" ou SVD) de la matrice $M = \sum_{i=1}^{k} (\omega_{1,i} - \overline{\omega}_1)(\omega_{l,i} - \overline{\omega}_l)'$, c'est-à-dire $M = P_1 \Lambda P_l'$ avec $P_1$

et $P_l$ des matrices orthogonales 3-par-3, et A une matrice diagonale avec des nombres non négatifs sur la diagonale.

L'étape 404 de détermination de l'ensemble de points $\Omega$, comprend en outre une étape 444 de détermination des points $u$ de $\Omega$ et d'une valeur $X(u)$ de chacun de ces points $u$, à partir des séquences d'images en coupe $S_l$ avec $l$ = 1...$l$, les matrices de rotation $Q_1$ et les translations $h_1$ étant connues : l'ensemble $\Omega$ est constitué des points $u$ du volume $D$ de position

$$Q_l' R_{\vec{a}_l, \tau_l (t_k^l - t_0^l)}^t \left( \pi_3 s - u_0^l - \overline{T}_k^l \right) + Q_l' \left( u_0^l - h_l \right),$$

pour chaque pixel $s$ de chaque image en coupe $X_k^l$ de chaque séquence $S_1$, avec $\tau_1$, $\vec{a}_l$, $u_0^l$ et $T_k^l$ qui sont respectivement les paramètres du mouvement pour la séquence $S_l$, $Q_1 = I_3$ la matrice identité 3-par-3, $h_1 = 0$,

$\overline{T}_k^l = R_{\vec{a}_l, \tau_l (t_k^l - t_1^l)} T_1^l + R_{\vec{a}_l, \tau_l (t_k^l - t_2^l)} T_2^l + \cdots + R_{\vec{a}_l, \tau_l (t_k^l - t_{k-1}^l)} T_{k-1}^l + T_k^l$ et $\overline{T}_0^l = 0$. On dit ainsi que $s$, $X_k^l$ et $S_l$ sont

respectivement le pixel, l'image et la séquence d'origine du point $u$.

Chacun des points $u$ de l'ensemble $\Omega$ est associé à la valeur $X_k^l(s)$ du pixel $s$ de l'image en coupe $X_k^l$ de la séquence $S_l$ : $X(u) = X_k^l(s)$ avec $s$, $X_k^l$ et $S_l$ étant respectivement le pixel, l'image et la séquence d'origine du point $u$

### Prise en compte de la durée d'acquisition

Au cours de la prise des images en coupe, l'objet $O$ se déplace pendant le temps d'exposition pour créer une image sur le plan focal. Ceci engendre un flou de mouvement supplémentaire non négligeable (en plus du flou défini par la fonction d'étalement du point).

Ce flou de mouvement est, dans un mode de réalisation de l'invention, pris en compte dans l'étape 400 de la représentation tridimensionnelle $V$ de l'objet $O$, de préférence lorsque le temps d'exposition est relativement long par rapport au temps nécessaire pour passer d'une image en coupe $X_k$ à l'image en coupe suivante $X_{k+1}$.

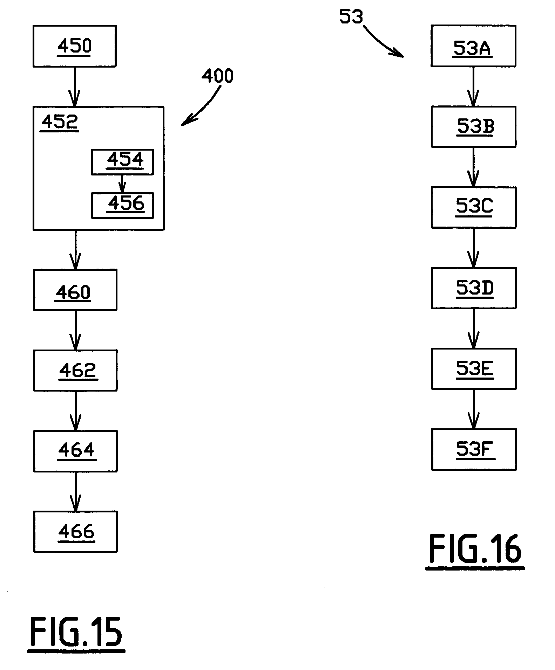

Ainsi, en référence à la figure 15, dans une troisième variante, l'étape 400 de détermination de la représentation tridimensionnelle $V$ de l'objet $O$ comprend une étape 450 de détermination d'un intervalle d'acquisition $I_k = [t_k + \delta_0; t_k + \delta_0 + \delta]$ de chaque image en coupe $X_k$, défini par un instant de début d'acquisition $t_k + \delta_0$ et un instant de fin d'acquisition $t_k + \delta_0 + \delta$, la différence donnant la durée d'acquisition $\delta$. On suppose, pour $0 \leq k < m$ : $t_k \leq t_k + \delta_0 < t_k + \delta_0 + \delta \leq t_{k+1}$.

Dans l'exemple décrit, l'instant de début d'acquisition $\delta_0$ et la durée d'acquisition $\delta$ sont les mêmes pour toutes les images en coupe. Néanmoins, la méthode s'étend facilement au cas où l'instant de début d'acquisition $\delta_0$, et la durée d'acquisition $\delta$ varient selon les images en coupe.

Durant l'exposition, le niveau de luminosité de chaque point du plan focal évolue progressivement en additionnant le niveau de luminosité des points du parcours qu'il traverse.

La position de l'objet $O$ à chaque instant $t_k$ étant connue (ou estimée), l'étape 400 de la représentation tridimensionnelle $V$ de l'objet $O$ comprend en outre une étape 452 de détermination de la position continue de l'objet $O$, en fonction du temps, entre les instants successifs $t_k$ et $t_{k+1}$, et plus particulièrement pendant les intervalles d'acquisition $I_k$.

Ainsi, l'étape 452 de détermination de la position continue de l'objet $O$ comprend une étape 454 de détermination d'une relation entre la position $\psi_{k,t}(u)$ à l'instant $t_k + t$ (entre les instants successifs $t_k$ et $t_{k+1}$) d'un point de l'objet, qui se situe à la position $u$ à l'instant $t_k$, et les paramètres de mouvement de l'objet : vitesse angulaire $\tau$, axe de rotation $L$ et suite de translations de perturbation $T_1 \ldots T_m$.

Etant donné que la durée entre les instants $t_k$ et $t_{k+1}$ est courte, nous considérons que le mouvement est approximativement composé de la rotation stable et d'une translation, fraction linéaire (proportionnelle au temps) de la translation de perturbation entre les instants $t_k$ et $t_{k+1}$.

Ainsi, la position $\psi_{k,t}(u)$ est donnée par :

$$\psi_{k,t}(u) = R_{\vec{a},\tau t}(u - u_0) + u_0 + \frac{t}{t_{k+1} - t_k} T_{k+1}, \text{ pour } 0 \le t \le t_{k+1} - t_k,$$

avec $T_{m+1} = 0$.

On remarquera que $\psi_{k,0}(u) = u$ et $\psi_{k,t_{k+1}-t_k}(u)$ est la position du point de l'objet à l'instant $t_{k+1}$ en partant de la position $u$ à l'instant $t_k$.

L'étape 452 de détermination de la position continue de l'objet $O$ comprend en outre une étape 456 de détermination d'une relation entre la position $C_{k,t}(s)$ à l'instant initial $t_0$ du point $o$ de l'objet, dont la position à l'instant $t_k + t$ est sur le pixel $s$ du plan de coupe $P$, à partir de la fonction $\psi_{k,t}$ précédente. Cette position $C_{k,t}(s)$ est donnée par :

$$C_{k,t}(s) = R_{\vec{a},\tau(t_k - t_0 + t)}^t (\pi_3 s - u_0 - \frac{t}{t_{k+1} - t_k} T_{k+1} - R_{\vec{a},\tau t} \overline{T}_k) + u_0.$$

L'étape 400 de détermination de la représentation tridimensionnelle $V$ de l'objet $O$ comprend en outre une étape 460 de choix de l'opérateur $Op$ comme étant l'intégrale sur l'intervalle d'acquisition $I_k$ de la convolution de la fonction de représentation tridimensionnelle $V_\beta$ avec la fonction d'étalement du point $f_R$.

L'étape 400 de détermination de la représentation tridimensionnelle $V$ de l'objet $O$ comprend en outre une étape 462 de calcul, pour chaque point $u$ de l'ensemble $\Omega$, d'une estimation $\tilde{X}(u)$ de la valeur de ce point $u$, à partir de l'opérateur $Op$. L'estimation $\tilde{X}(u)$ est donnée par :

$$\tilde{X}(u) = \int_{t=\delta_0}^{\delta_0+\delta} V_\beta * f_{R_{\vec{a},\tau(t_k - t_0 + t)}} (C_{k,t}(s)) dt,$$

où $s$ et l'image en coupe $X_k$ (de l'instant de prise $t_k$) sont respectivement le pixel et l'image d'origine du point $u$,

Comme pour la seconde variante, l'étape 400 de détermination de la représentation tridimensionnelle $V$ de l'objet $O$ comprend en outre une étape 464 de choix de la fonction de représentation tridimensionnelle $V_\beta$ en tant que décomposition en fonctions radiales de base $\phi$ :

$$\forall u \in D, V_\beta(u) = \sum_{w \in W} \phi(u - w)\beta(w),$$

avec $W$ l'ensemble des noeuds dans le volume $D$.

L'étape 400 de détermination de la représentation tridimensionnelle $V$ de l'objet $O$ comprend en outre une étape 466 de détermination des coefficients $\beta(w)$.

Plus précisément, en remplaçant $V_\beta$ par sa décomposition en fonctions radiales de base, on obtient, pour chaque point $u$ de l'ensemble $\Omega$ :

$$\widetilde{X}(u) = \sum_{w \in W} \int_{t=\delta_0}^{\delta_0+\delta} \gamma(\pi_3 s + R_{\vec{a},\tau(t_k-t_0+t)}(u_0-w) - \frac{t}{t_{k+1}-t_k}T_{k+1} - R_{\vec{a},\tau_t}\overline{T}_k - u_0)dt \, \beta(w),$$

où $s$ et l'image en coupe $X_k$ (de l'instant de prise $t_k$) sont respectivement le pixel et l'image d'origine du point $u$, et $\gamma = \phi^*f$.
Notons

$$\gamma_{k,w}(x) = \int_{t=\delta_0}^{\delta_0+\delta} \gamma(x + R_{\vec{a},\tau(t_k-t_0+t)}(u_0-w) - \frac{t}{t_{k+1}-t_k}T_{k+1} - R_{\vec{a},\tau_t}\overline{T}_k - u_0)dt \, .$$

On a donc, pour chaque point $u$ de l'ensemble Q :

$$\widetilde{X}(u) = \sum_{w \in W} \gamma_{k,w}(\pi_3 s) \, \beta(w),$$

où $s$ et l'image en coupe $X_k$ (de l'instant de prise $t_k$) sont respectivement le pixel et l'image d'origine du point $u$.
Comme pour la seconde variante $\gamma = \phi^*f$ est de préférence calculé analytiquement ou numériquement par calculs approchés.
Ainsi, l'étape 466 de détermination des coefficients $\beta(w)$ comprend une étape de calcul des $\gamma_{k,w}$.
Si le calcul analytique de $\gamma_{k,w}$ est lourd ou impossible, $\gamma_{k,w}$ est approché par une somme discrète, par exemple la somme de Riemann :

$$\gamma_{k,w}(x) \approx \frac{\delta}{J}\sum_{j=0}^{J-1} \gamma(x + R_{\vec{a},\tau(t_k-t_0+\delta_0+\delta\frac{j}{J})}(u_0-w) - \frac{\delta_0+\delta\frac{j}{J}}{t_{k+1}-t_k}T_{k+1} - R_{\vec{a},\tau(\delta_0+\delta\frac{j}{J})}\overline{T}_k - u_0),$$

avec $J$ un nombre entier assez grand, par exemple $J \approx 20$.
Plus généralement, dans le cas où l'on utilise plusieurs séquences $S_l$, $l = 1,..., I$, les rotations $Q_l$ et les translations $h_l$ étant connues, l'étape 466 de détermination des coefficients $\beta(w)$ comprend une étape consistant à sensiblement placer toutes les positions $O_l$ des représentations de l'objet $O$ dans une même position de référence. Rappelons qu'en choisissant par exemple la première séquence comme la séquence de référence, $Q_1 = I_3$ (avec $I_3$ la matrice identité 3-par-3) et $h_1 = 0$, on peut décomposer dans le repère de la séquence de référence, pour chaque point $u$ de l'ensemble $\Omega$, l'estimation $\widetilde{X}(u)$ de la valeur de ce point $u$ en une combinaison linéaire associée aux coefficients $\beta(w)$ :

$$\widetilde{X}(u) = \sum_{w \in W} \gamma_{k,w}^l(\pi_3 s) \, \beta(w),$$

avec

$$\gamma_{k,w}^l(x) = \int_{t=\delta_0}^{\delta_0+\delta} \gamma(R_{\vec{a}_l,\tau_l(t_k^l-t_0^l+t)}Q_l^t R_{\vec{a}_l,\tau_l(t_k^l-t_0^l+t)}^t(x - u_0^l - \frac{t}{t_{k+1}^l-t_k^l}T_{k+1}^l - R_{\vec{a}_l,\tau_l}\overline{T}_k^l) + R_{\vec{a}_l,\tau_l(t_k^l-t_0^l+t)}(Q_l^t(u_0^l-h_l)-w))dt$$

où $s$ , l'image en coupe $X_k^l$ (de l'instant de prise $t_k^l$) et $S_l$ sont respectivement le pixel, l'image et la séquence d'origine du point $u$ , $\tau_l$, $\vec{a}_l$, $u_0^l$ et $T_k^l$ sont les paramètres du mouvement pour la séquence $S_l$, $T_{m_l+1}^l = 0$ et $\gamma = \phi^*f$.

Ainsi, dans ce cas, l'étape 466 comprend une étape de calcul des $\gamma_{k,w}^l$ .

Comme $\gamma_{k,w}(x)$, $\gamma_{k,w}^{l}(x)$ peut aussi être approché par une somme discrète (somme de Riemann par exemple).

De préférence, *D* est choisi suffisamment grand tel que *D* contient tous les points *u* de position

$$Q_l^{t} R_{\vec{a}_\ell . \tau_l (t_k^l - t_0^l)}^{t} \left( \pi_3 s - u_0^l - \overline{T}_k^l \right) + Q_l^{t} \left( u_0^l - h_l \right),$$

pour chaque pixel *s* de chaque image en coupe $X_k^l$ de chaque séquence $S_l$, avec *l* =1...*I*. Les paramètres β de la fonction de représentation tridimensionnelle $V_\beta$ sont déterminés en minimisant la fonction de coût quadratique suivante :

$$E(\beta) = \sum_{l=1}^{I} \sum_{k=1}^{m_l} \sum_{s} \left( X_k^l(s) - \sum_{w \in W} \gamma_{k,w}^{l}(\pi_3 s) \beta(w) \right)^2 + \lambda \beta^{t} A \beta,$$

où *A* est une matrice semi définie positive, $\beta^{t} A \beta$ mesure l'irrégularité des coefficients β(*w*), par exemple *A* est choisie de la même manière que précédemment, λ > 0 est le paramètre de compromis entre l'adéquation de la fonction de représentation tridimensionnelle et la régularité des coefficients. *E*(β) s'écrit sous la forme matricielle suivante:

$$E(\beta) = \| y - \mathrm{K}\beta \|^2 + \lambda \beta^{t} A \beta,$$

où β est le vecteur des coefficients, les éléments du vecteur *y* sont les $X_k^l(s)$ , et la matrice K est composée des éléments $\gamma_{k,w}^{l}(\pi_3 s)$ .

Le résultat de minimisation de *E*(β) est la solution du système linéaire suivant :

$$(\mathrm{K}'\mathrm{K} + \lambda A)\beta = \mathrm{K}' y \, .$$

Pour calculer les coefficients β(*w*), on peut utiliser les méthodes d'optimisation numériques, par exemple la méthode de gradient conjugué, ou la méthode d'optimisation par bloc présentée précédemment.

**Réglage de la position du plan de coupe**

Il est souhaitable que la plus grande partie de l'objet *O* passe dans le plan de coupe *P*. Dans une configuration optimale, l'axe de rotation *L* est sensiblement contenu dans le plan de coupe *P*. Ainsi, dans un mode de réalisation de l'invention, le procédé comprend une étape 53, intercalée entre les étapes 52 et 54, de réglage de la position du plan de coupe *P* par rapport à l'axe de rotation *L*. Bien évidemment, l'étape de réglage peut également être mise en oeuvre indépendamment des étapes 50, 52, 54 et 56.

Il est prévu trois façons de réaliser l'étape 53 de réglage, afin d'obtenir sensiblement la configuration optimale, ou bien, à défaut, une configuration convenable.

***Première variante de réglage***

Dans une première variante, l'étape 53 de réglage comprend le déplacement et l'inclinaison du microscope optique afin de placer l'axe de rotation *L* dans le plan focal *P*. Cette variante permet d'obtenir la configuration optimale.

Cette variante comprend la détermination de l'axe de rotation *L* de la même manière qu'aux étapes 54 et 56.

***Seconde variante de réglage***

Dans une seconde variante, l'étape 53 de réglage comprend la modification du champ électrique ou électromagnétique afin de placer l'axe de rotation *L* dans le plan focal *P*. Cette variante permet également d'obtenir la configuration optimale.

Cette variante comprend la détermination de l'axe de rotation *L* de la même manière qu'aux étapes 54 et 56.

### *Troisième variante de réglage*

En référence à la figure 16, dans une troisième variante, l'étape 53 de réglage comprend le déplacement du plan focal *P* suivant la direction *Z* (la direction perpendiculaire au plan focal *P*) afin que le plan focal *P* coupe l'objet *O* sensiblement au milieu de l'objet. Le déplacement du plan focal *P* est obtenu en translatant le microscope optique 12, et/ou en agissant sur la lentille 14 pour changer la distance focale.

Dans l'exemple décrit, le milieu de l'objet *O* est pris comme étant le barycentre de l'objet *O*.

Ainsi, en référence à la figure 16, l'étape 53 de réglage comprend tout d'abord une étape 53A de prise d'une séquence d'images en coupe $X_0...X_m$, puis une étape 53B de détermination de la vitesse angulaire $\tau$, de l'axe de rotation *L* et de la suite de translations de perturbation $T_1 ... T_m$. L'étape 53B est mise en oeuvre de la même manière que l'étape 56.

L'étape 53 de réglage comprend en outre une étape 53C de détermination de l'ensemble de points $\Omega$ de la même manière qu'à l'étape 404.

L'étape 53 de réglage comprend en outre une étape 53D de détermination d'un barycentre *b* des points lumineux de l'ensemble $\Omega$. Le barycentre *b* est de préférence déterminé par la relation :

$$b = \frac{\sum_{i=0}^{n}\sum_{s} 1_{X_i(s)>\alpha} C_k(s)}{\sum_{i=0}^{n}\sum_{s} 1_{X_i(s)>\alpha}},$$

avec $X_0...X_n$, $n \le m$, la partie des images en coupes $X_0...X_m$, qui ont été acquises pendant l'intervalle de temps au cours duquel l'objet réalise un nombre maximum de tours complets en tournant autour de l'axe de rotation, $1_{B>A} = 1$ quand B est supérieur à A et 0 sinon, et $\alpha$ est par exemple le *q*-quantile de niveau de gris des images en coupe $X_0...X_n$ (ce qui signifie que la proportion des pixels qui ont un niveau de gris inférieur ou égal à $\alpha$ est sensiblement égale à *q*). Généralement, q vaut entre 60% et 95%.

L'étape 53 de réglage comprend en outre une étape 53E de calcul de la projection $\overline{b}$ du barycentre *b* sur l'axe de rotation *L*.

L'étape 53 de réglage comprend en outre une étape 53F de réglage du système d'imagerie 10 pour amener le plan de coupe *P* sur la projection $\overline{b}$ du barycentre *b*.

### **Annexe :**

Soit $\phi$ est une fonction radiale de base. Pour toute matrice de rotation *R* , $\phi(Rx) = \phi(x)$. On a alors :

$$
\begin{aligned}
\phi * f_R(x) &= \int \phi(x-u) f(Ru)\,du \\
&= \int \phi(x - R'y) f(y)\,dy \\
&= \int \phi(Rx - y) f(y)\,dy \\
&= \phi * f(Rx).
\end{aligned}
$$

### **Revendications**

**1.** Procédé de détermination d'une représentation tridimensionnelle (*V*) d'un objet (*O*), **caractérisé en ce qu'**il comprend :

- la détermination (404) d'un ensemble ($\Omega$) de points (*u*) d'un volume (*D*) et d'une valeur (*X(u)*) de chacun de ces points (*u*) à un instant (*t_0*) donné, l'ensemble ($\Omega$) de points (*u*) comprenant des points (*o*) de l'objet (*O*) dans sa position à l'instant donné ($t_0$),

- le choix (408) d'une fonction de représentation tridimensionnelle ($V_\beta$) paramétrable avec des paramètres ($\beta$), et d'une opération ($Op$) donnant, à partir de la fonction de représentation tridimensionnelle ($V_\beta$), une fonction d'estimation ($\tilde{X} = Op(V_\beta)$) de la valeur de chaque point ($u$) de l'ensemble ($\Omega$),
- la détermination de paramètres ($\beta$), tels que, pour chaque point ($u$) de l'ensemble ($\Omega$), l'estimation ($\tilde{X}(u)$) de la valeur du point ($u$) donne sensiblement la valeur du point ($X(u)$),

et **en ce que** :

- la valeur ($X(u)$) de chaque point ($u$) de l'ensemble ($\Omega$) est obtenue à partir d'une image en coupe ($X_k$) de l'objet, respective associée au point ($u$), et
- l'opération ($Op$) donne une fonction d'estimation ($\tilde{X} = Op(V_\beta, f_R)$) de la valeur de chaque point ($u$) de l'ensemble ($\Omega$), à partir de la fonction de représentation tridimensionnelle ($V_\beta$) et d'une fonction d'étalement du point ($f_R$), la fonction d'étalement du point ($f_R$) dépendant d'une rotation ($R$) entre la position de l'objet ($O$) à l'instant ($t_k$) de prise de l'image en coupe ($X_k$) respective associée au point ($u$), et la position de l'objet ($O$) à l'instant donné ($t_0$).

2. Procédé selon la revendication 1, **caractérisé en outre en ce que** la fonction de représentation tridimensionnelle ($V_\beta$) comprend une décomposition en fonctions de base ($\phi$) autour de noeuds ($w$), afin d'obtenir une somme de termes, chaque terme comprenant la fonction de base ($\phi$) avec une variable ($u$-$w$) dépendant d'un noeud ($w$) respectif associé à ce terme.

3. Procédé selon la revendication 2, **caractérisé en outre en ce que** la fonction de base ($\phi$) comprend un produit de fonctions B-spline ($\eta$) dans chacune des trois directions (X, Y, et Z) de l'espace.

4. Procédé selon l'une quelconque des revendications 1 à 3, **caractérisé en outre en ce que** :

- le volume ($D$) comprend une pluralité de sous volumes ($D_i$),
- les paramètres ($\beta$) étant répartis en groupe de paramètres ($\{\beta\}_i$), la fonction de représentation tridimensionnelle ($V_\beta$) est choisie de sorte que chaque groupe de paramètres ($\{\beta\}_i$) est associé à un sous volume ($D_i$) respectif,
- la détermination des paramètres ($\beta$) comprend, successivement pour chaque sous volume ($D_i$), la détermination des paramètres ($\{\beta\}_i$) associés à ce sous volume ($D_i$), tels que, pour chaque point ($u$) du sous volume ($D_i$), et, de préférence également des sous volumes directement contiguës au sous volume ($D_i$), l'estimation ($\tilde{X}(u)$) de la valeur du point ($u$) donne sensiblement la valeur ($X(u)$) du point ($u$), les paramètres $\{\beta\}_{j\neq i}$ associés aux autres sous volumes ($D)_{j\neq i}$) étant fixés à une valeur donnée.

5. Procédé selon la revendication 2, **caractérisé en outre en ce que** - la fonction de représentation tridimensionnelle ($V_\beta$) est choisie telle que, pour chaque point u de volume ($D$):

$$Op(\phi, f_R)(u) = Op(\phi, f)(Ru),$$

avec $Op$ l'opération, $\phi$ la fonction de base, $R$ une rotation quelconque, $f_R$ la fonction d'étalement du point pour la rotation $R$, $f_R(u) = f(Ru)$, $f$ la fonction d'étalement du point sans rotation, et $Ru$ le point résultant de la rotation du point $u$ par la rotation $R$.

6. Procédé selon la revendication 5, **caractérisé en outre en ce que** l'opération ($Op$) est une convolution de la fonction de représentation tridimensionnelle ($V_\beta$) avec la fonction d'étalement du point ($f_R$).

7. Procédé selon la revendication 6, **caractérisé en outre en ce que** la fonction de base ($\phi$) est une fonction radiale de base, chaque terme dépendant de la distance de chaque point ($u$) avec le noeud ($w$) associé à ce terme, mais étant indépendante de la direction entre le point ($u$) et le noeud ($w$).

8. Procédé selon l'une quelconque des revendications 1 à 7, **caractérisé en outre en ce que** la détermination (404) de l'ensemble ($\Omega$) de points ($u$) et d'une valeur ($X(u)$) de chaque point ($u$), est réalisée à partir de plusieurs séquences ($S_l$) d'images en coupe, et **en ce qu'**il comprend :

- la détermination (420) d'une fonction de représentation tridimensionnelle ($V_l$), sur un sous volume respectif ($D_l$), pour chaque séquence ($S_l$), chaque représentation tridimensionnelle donnant une représentation de l'objet dans une position respective,
- la détermination (424), pour chaque séquence ($S_l$), d'une rotation ($Q_l$) et d'une translation ($h_l$) permettant de sensiblement placer toutes les positions ($O_l$) des représentations de l'objet ($O$) dans une position de référence.

9. Procédé selon la revendication 8, **caractérisé en outre en ce que** la détermination (424), pour chaque séquence ($S_l$), de la rotation ($Q_l$) et de la translation ($h_l$) comprend :

- la sélection (428), dans chaque sous ensemble ($D_l$), d'au moins trois groupes ($g_1...g_k$), de préférence quatre ou plus, de points du sous ensemble ($D_l$), selon un critère de sélection, qui est le même pour toutes les séquences ($S_l$) d'images en coupe,
- la détermination de la rotation ($Q_l$) et de la translation ($h_l$) de chaque séquence ($S_l$) d'images en coupe à partir des groupes de points ($g_1 ... g_k$).

10. Procédé selon la revendication 9, **caractérisé en ce que** la détermination de la rotation ($Q_l$) et de la translation ($h_l$) de chaque séquence ($S_l$) d'images en coupe à partir des groupes de points ($g_1...g_k$) comprend :

- le calcul (436), pour chaque séquence ($S_l$) d'images en coupe, d'un barycentre de chacun des groupes de points ($g_1...g_k$),
- la détermination (442) de la rotation ($Q_l$) et de la translation ($h_l$) de chaque séquence ($S_l$) à partir des barycentres.

11. Procédé selon l'une quelconque des revendications précédentes, **caractérisé en outre en ce qu'**il comprend :

- la détermination (450) d'un intervalle d'acquisition ($I_k = [t_k + \delta_0; t_k + \delta_0 + \delta]$) de chaque image en coupe ($X_k$),
- la détermination d'un mouvement continu de l'objet pendant l'intervalle d'acquisition de chaque image en coupe,
- la prise en compte du mouvement continu de l'objet pendant l'intervalle d'acquisition pour déterminer la représentation tridimensionnelle de l'objet.

12. Procédé selon la revendication 11, **caractérisé en outre en ce que** :

- le mouvement de l'objet ($O$) par rapport au plan de coupe ($P$) comporte un mouvement de rotation autour d'un axe fixe et avec une vitesse angulaire fixe et une suite de translations de perturbation, chacune subit par l'objet entre deux images en coupe respectives successives,
- le mouvement continu comprend la rotation autour de l'axe fixe et avec la vitesse angulaire fixe pendant le temps d'acquisition de chaque image en coupe, et une fraction linéaire de la translation de perturbation subit par l'objet entre l'image en coupe et la suivante.

13. Programme d'ordinateur **caractérisé en ce qu'**il est conçu pour, lorsque mis en oeuvre sur un ordinateur, mettre en oeuvre les étapes d'un procédé selon l'une quelconque des revendications 1 à 12.

14. Système d'imagerie **caractérisé en ce qu'**il comprend :

- des moyens (12) permettant d'obtenir des images dans un plan focal $P$,
- un réceptacle (18) pour recevoir un objet ($O$),
- des moyens (34, 30) pour mettre l'objet ($O$) en mouvement,
- des moyens (36) pour recevoir des images en coupe prises dans le plan focal, adaptés pour mettre en oeuvre un procédé selon l'une quelconque des revendications 1 à 12.

**Patentansprüche**

1. Verfahren zum Bestimmen einer dreidimensionalen Darstellung (V) eines Objekts (O), **dadurch gekennzeichnet, dass** es umfasst:

- die Bestimmung (404) einer Menge ($\Omega$) von Punkten (u) eines Volumens (D) und eines Wertes (X(u)) jedes dieser Punkte (u) zu einem gegebenen Zeitpunkt ($t_0$), wobei die Menge ($\Omega$) von Punkten (u) Punkte (o) des Objekts (O) in seiner Position zum gegebenen Zeit-punkt ($t_0$) einschließt,
- die Wahl (308) einer Funktion ($V_\beta$) der dreidimensionalen Darstellung, die mit Parametern ($\beta$) parametrierbar ist, und einer Operation (Op), die aus der Funktion ($V_\beta$) der dreidimensionalen Darstellung eine Schätzfunktion

($\tilde{X}$ = $Op(V\beta)$) des Wertes jedes Punktes (u) der Menge ($\Omega$) ergibt,
- die Bestimmung von Parametern ($\beta$) derart, dass für jeden Punkt (u) der Menge ($\Omega$) die Schätzung ($\tilde{X}(u)$) des Wertes des Punktes (u) in etwa den Wert des Punktes (X(u)) ergibt,

und dass:

- der Wert (X(u)) jedes Punktes (u) der Menge ($\Omega$) aus einem jeweils dem Punkt (u) zugeordneten Schnittbild ($X_k$) des Objekts erhalten wird, und
- die Operation (Op) eine Schätzfunktion ($\tilde{X}$ = $Op(V_\beta, f_R)$) des Wertes jedes Punktes (u) der Menge ($\Omega$) aus der Funktion ($V_\beta$) der dreidimensionalen Darstellung und einer Verteilungsfunktion ($f_R$) des Punktes ergibt, wobei die Verteilungsfunktion ($f_R$) des Punktes von einer Rotation (R) zwischen der Position des Objekts (O) zum Zeitpunkt ($t_k$) der Aufnahme des jeweiligen, dem Punkt (u) zugeordneten Schnittbildes ($X_k$) und der Position des Objekts (O) zum gegebenen Zeitpunkt ($t_0$) abhängt.

2. Verfahren nach Anspruch 1, außerdem **gekennzeichnet dadurch, dass** die Funktion ($V_\beta$) der dreidimensionalen Darstellung eine Zerlegung in Basisfunktionen ($\phi$) um Knoten (w) herum umfasst, um eine Summe von Termen zu erhalten, wobei jeder Term die Basisfunktion ($\phi$) mit einer Variablen (u - w) umfasst, die von einem jeweiligen Knoten (w) abhängt, der diesem Term zugeordnet ist.

3. Verfahren nach Anspruch 2, außerdem **dadurch gekennzeichnet, dass** die Basisfunktion ($\phi$) ein Produkt von B-Splinefunktionen ($\eta$) in jede der drei Richtungen (X, Y, und Z) des Raums umfasst.

4. Verfahren nach einem beliebigen der Ansprüche 1 bis 3, außerdem **dadurch gekennzeichnet, dass**

- das Volumen (D) eine Mehrzahl von Untervolumen ($D_i$) umfasst,
- die Parameter ($\beta$) in Gruppen von Parametern ($\{\beta\}_i$) aufgeteilt sind und die Funktion ($V\beta$) der dreidimensionalen Darstellung so gewählt wird, dass jede Parametergruppe ($\{\beta\}_i$) einem jeweiligen Untervolumen ($D_i$) zugeordnet ist;
- die Bestimmung der Parameter ($\beta$) umfasst, nacheinander für jedes Untervolumen ($D_i$), die Bestimmung der diesem Untervolumen ($D_i$) zugeordneten Parameter ($\{\beta\}_i$), derart, dass für jeden Punkt (u) des Untervolumens ($D_i$) und vorzugsweise gleichfalls der direkt an das Untervolumen ($D_i$) angrenzenden Untervolumen die Schätzung ($\tilde{X}(u)$) des Wertes des Punkts (u) etwa den Wert (X(u)) des Punkts (u) ergibt, wobei die Parameter ($\{\beta\}_{j \neq i}$, die den anderen Untervolumen ($D_{j \neq i}$) zugeordnet sind, auf einen gegebenen Wert festgelegt werden.

5. Verfahren nach Anspruch 2, außerdem **dadurch gekennzeichnet, dass** die Funktion der dreidimensionalen Darstellung ($V_\beta$) so gewählt wird, dass für jeden Punkt (u) des Volumens (D):

$$Op(\phi, f_R)(u) = Op(\phi, f)(Ru),$$

wobei Op die Operation, $\phi$ die Basisfunktion, R eine beliebige Rotation, $f_R$ die Verteilungsfunktion des Punktes für die Rotation R, $f_R(u)=f(Ru)$, f die Verteilungsfunktion des Punktes ohne Rotation und Ru der Punkt, der aus der Rotation des Punktes u mit der Rotation R resultiert, sind.

6. Verfahren nach Anspruch 5, außerdem **dadurch gekennzeichnet, dass** die Operation (Op) eine Faltung der Funktion ($V_\beta$) der dreidimensionalen Darstellung mit der Verteilungsfunktion ($f_R$) des Punktes ist.

7. Verfahren nach Anspruch 6, außerdem **dadurch gekennzeichnet, dass** die Basisfunktion ($\phi$) eine radiale Basisfunktion ist, wobei jeder Term von der Entfernung jedes Punktes (u) zu dem diesem Term zugeordneten Knoten (w) abhängt, aber unabhängig von der Richtung zwischen dem Punkt (u) und dem Knoten (w) ist.

8. Verfahren nach einem beliebigen der Ansprüche 1 bis 7, außerdem **dadurch gekennzeichnet, dass** die Bestimmung (404) der Menge ($\Omega$) von Punkten (u) und eines Wertes (X(u)) jedes Punktes (u) aus mehreren Sequenzen ($S_l$) von Schnittbildern relisiert wird, und dass es umfasst:

- die Bestimmung (420) einer Funktion ($V_l$) der dreidimensionalen Darstellung, auf ein jeweiliges Untervolumen ($D_l$), für jede Sequenz ($S_l$), wobei jede dreidimensionale Darstellung eine Darstellung des Objekts in einer jeweiligen Position ergibt,

- die Bestimmung (424) einer Rotation ($Q_l$) und einer Translation ($h_l$) für jede Sequenz ($S_l$), wodurch ermöglicht wird, dass im Wesentlichen alle die Positionen ($O_l$) der Darstellungen des Objekts (O) in eine Referenzposition platziert werden.

9. Verfahren nach Anspruch 8, darüber hinaus **dadurch gekennzeichnet, dass** die Bestimmung (424) der Rotation ($Q_l$) und der Translation (hl) für jede Sequenz ($S_l$) umfasst:

- die Auswahl (428) in jeder Untermenge ($D_l$) von mindestens drei Gruppen ($g_1...g_k$), vorzugsweise vier oder mehr, von Punkten der Untergruppe ($D_l$) nach einem Auswahlkriterium, das für alle die Sequenzen ($S_l$) von Schnittbildern das Gleiche ist,
- die Bestimmung der Rotation ($Q_l$) und der Translation ($h_l$) jeder Sequenz ($S_l$) von Schnittbildern aus den Gruppen der Punkte ($g_1...g_k$).

10. Verfahren nach Anspruch 9, **dadurch gekennzeichnet, dass** die Bestimmung der Rotation ($Q_l$) und der Translation ($h_l$) jeder Sequenz ($S_l$) von Schnittbildern aus den Gruppen der Punkte ($g_1...g_k$) umfasst:

- die Berechnung (436) für jede Sequenz ($S_l$) von Schnittbildern eines Baryzentrums jeder der Gruppen von Punkten ($g_1...g_k$),
- die Bestimmung (442) der Rotation ($Q_l$) und der Translation ($h_l$) jeder Sequenz ($S_l$) aus den Baryzentren.

11. Verfahren nach einem beliebigen der vorhergehenden Ansprüche, außerdem **dadurch gekennzeichnet, dass** es umfasst:

- die Bestimmung (450) eines Erfassungsintervalls ($I_k=[t_k+\delta_0;t_k+\delta_0+\delta]$) jedes Schnittbildes ($X_k$),
- die Bestimmung einer kontinuierlichen Bewegung des Objekts während des Erfassungsintervalls jedes Schnittbildes,
- die Berücksichtigung der kontinuierlichen Bewegung des Objekts während des Erfassungsintervalls, um die dreidimensionale Darstellung des Objekts zu bestimmen.

12. Verfahren nach Anspruch 11, außerdem **dadurch gekennzeichnet, dass**:

- die Bewegung des Objekts (O) in Bezug auf die Schnittebene (P) eine Rotationsbewegung um eine feste Achse und mit einer festgelegten Winkelgeschwindigkeit und eine Folge von Störungstranslationen aufweist, wobei jede vom Objekt zwischen zwei jeweils aufeinanderfolgenden Schnittbildern erfahren wird,
- die kontinuierliche Bewegung die Rotation um die feste Achse und mit der festen Winkelgeschwindigkeit während der Erfassungszeit jedes Schnittbildes und eine lineare Fraktion der Störungstranslation, die von dem Objekt zwischen dem Schnittbild und dem Folgenden erfahren wird, umfasst.

13. Computerprogramm, **dadurch gekennzeichnet, dass** es für die Durchführung der Schritte eines Verfahrens nach einem beliebigen der Ansprüche 1 bis 12 konzipiert ist, wenn es auf einem Rechner durchgeführt wird.

14. Bildgehendes System, **dadurch gekennzeichnet, dass** es umfasst:

- Mittel (12), die es gestatten, Bilder in einer fokalen Ebene P zu erhalten,
- ein Behältnis (18), um ein Objekt (O) aufzunehmen,
- Mittel (34, 30), um das Objekt (O) in Bewegung zu versetzen,
- Mittel (36) zum Erhalten von in der Fokalebene aufgenommenen Schnittbildern und die ausgebildet sind, um ein Verfahren nach einem beliebigen der Ansprüche 1 bis 12 durchzuführen.

**Claims**

1. A method for determining a three-dimensional representation (*V*) of an object (*O*), **characterized in that** it comprises:

- the determination (404) of a set ($\Omega$) of points (*u*) of a volume (*D*) and of a value ($X(u)$) of each of these points (*u*) at a given instant ($t_0$), the set ($\Omega$) of points (*u*) comprising points (*o*) of the object (*O*) in its position at the given instant ($t_0$),

- the choosing (408) of a three-dimensional representation function ($V_\beta$) that can be parametrized with parameters ($\beta$), and of an operation ($Op$) giving, on the basis of the three-dimensional representation function ($V_\beta$), an estimation function ($\tilde{X} = Op(V_\beta)$) for the value of each point ($u$) of the set ($\Omega$),
- the determination of parameters ($\beta$), such that, for each point ($u$) of the set ($\Omega$), the estimation ($\tilde{X}(u)$) of the value of the point ($u$) gives substantially the value of the point ($X(u)$)

and **in that** :

- the value ($X(u)$) of each point ($u$) of the set ($\Omega$) is obtained on the basis of a respective sectional image ($X_k$) of the object, associated with the point ($u$),
- the operation ($Op$) gives a function ($\tilde{X} = Op(V_\beta, f_R)$) for estimating the value of each point ($u$) of the set ($\Omega$), on the basis of the three-dimensional representation function ($V_\beta$) and of a point spread function ($f_R$), the point spread function ($f_R$) depending on a rotation ($R$) between the position of the object ($O$) at the instant ($t_k$) of capture of the respective sectional image ($X_k$) associated with the point ($u$), and the position of the object ($O$) at the given instant ($t_0$).

2. The method as claimed in claim 1, furthermore **characterized in that** the three-dimensional representation function ($V_\beta$) comprises a decomposition into basis functions ($\phi$) around nodes ($w$), so as to obtain a sum of terms, each term comprising the basis function ($\phi$) with a variable ($u - w$) dependent on a respective node ($w$) associated with this term.

3. The method as claimed in claim 2, furthermore **characterized in that** the basis function ($\phi$) comprises a product of B-spline functions ($\eta$) in each of the three directions (X, Y and Z) in space.

4. The method as claimed in any one of claims 1 to 3, furthermore **characterized in that**:

- the volume ($D$) comprises a plurality of sub-volumes ($D_i$),
- the parameters ($\beta$) being distributed in groups of parameters ($\{\beta\}_i$), the three-dimensional representation function ($V_\beta$) is chosen so that each group of parameters ($\{\beta\}_i$) is associated with a respective sub-volume ($D_i$),
- the determination of the parameters ($\beta$) comprises, successively for each sub-volume ($D_i$), the determination of the parameters ($\{\beta\}_i$) associated with this sub-volume ($D_i$), such that, for each point ($u$) of the sub-volume ($D_i$), and preferably also of the sub-volumes directly contiguous with the sub-volume ($D_i$), the estimation ($\tilde{X}(u)$) of the value of the point ($u$) gives substantially the value ($X(u)$) of the point ($u$), the parameters $\{\beta\}_{j \neq i}$ associated with the other sub-volumes ($D_{j \neq i}$) being fixed at a given value.

5. The method as claimed in claim 2, furthermore **characterized in that**:

- the three-dimensional representation function ($V_\beta$) is chosen such that, for each point $u$ of volume ($D$):

$$Op(\phi, f_R)(u) = Op(\phi, f)(Ru) \, ,$$

with $Op$ the operation, $\phi$ the basis function, $R$ an arbitrary rotation, $f_R$ the point spread function for the rotation $R$, $f_R(u) = f(Ru)$, $f$ the point spread function without rotation, and $Ru$ the point resulting from the rotation of the point $u$ by the rotation $R$.

6. The method as claimed in claim 5, furthermore **characterized in that** the operation ($O_p$) is a convolution of the three-dimensional representation function ($V_\beta$) with the point spread function ($f_R$).

7. The method as claimed in claim 6, furthermore **characterized in that** the basis function ($\phi$) is a radial basis function, each term depending on the distance of each point ($u$) with the node ($w$) associated with this term, but being independent of the direction between the point ($u$) and the node ($w$).

8. The method as claimed in any one of claims 1 to 7, furthermore **characterized in that** the determination (404) of the set ($\Omega$) of points ($u$) and of a value ($X(u)$) of each point ($u$) is carried out on the basis of several sequences ($S_l$) of sectional images, and **in that** it comprises:

- the determination (420) of a three-dimensional representation function ($V_l$), on a respective sub-volume ($D_l$), for each sequence ($S_l$), each three-dimensional representation giving a representation of the object in a respective position,
- the determination (424), for each sequence ($S_l$), of a rotation ($Q_l$) and of a translation ($h_l$) making it possible to substantially place all the positions ($O_l$) of the representations of the object ($O$) in a reference position.

9. The method as claimed in claim 8, furthermore **characterized in that** the determination (424), for each sequence ($S_l$), of the rotation ($Q_l$) and of the translation ($h_l$) comprises:

- the selection (428), in each subset ($D_l$), of at least three groups ($g_1...g_k$), preferably four or more, of points of the subset ($D_l$), according to a selection criterion, which is the same for all the sequences ($S_l$) of sectional images,
- the determination of the rotation ($Q_l$) and of the translation ($h_l$) of each sequence ($S_l$) of sectional images on the basis of the groups of points ($g_1...g_k$).

10. The method as claimed in claim 9, **characterized in that** the determination of the rotation ($Q_l$) and of the translation ($h_l$) of each sequence ($S_l$) of sectional images on the basis of the groups of points ($g_1...g_k$) comprises:

- the calculation (436), for each sequence ($S_l$) of sectional images, of a barycenter of each of the groups of points ($g_1...g_k$),
- the determination (442) of the rotation ($Q_l$) and of the translation ($h_l$) of each sequence ($S_l$) on the basis of the barycenters.

11. The method as claimed in any one of the preceding claims, furthermore **characterized in that** it comprises:

- the determination (450) of an interval acquisition ($I_k = [t_k + \delta_0; t_k + \delta_0 + \delta]$) of each sectional image ($X_k$),
- the determination of a continuous motion of the object during the interval of acquisition of each sectional image,
- the taking into account of the continuous motion of the object during the acquisition interval so as to determine the three-dimensional representation of the object.

12. The method as claimed in claim 11, furthermore **characterized in that**:

- the motion of the object ($O$) with respect to the section plane ($P$) comprises a motion of rotation about a fixed axis and with a fixed angular rate and a series of perturbation translations, each undergone by the object between two successive respective sectional images,
- the continuous motion comprises the rotation about the fixed axis and with the fixed angular rate during the acquisition time for each sectional image, and a linear fraction of the perturbation translation undergone by the object between the sectional image and the next one.

13. A computer program **characterized in that** it is designed so as, when implemented on a computer, to implement the steps of a method as claimed in any one of claims 1 to 12.

14. An imaging system **characterized in that** it comprises:

- means (12) making it possible to obtain images in a focal plane $P$,
- a receptacle (18) for receiving an object ($O$),
- means (34, 30) for setting the object ($O$) into motion,
- means (36) for receiving sectional images captured in the focal plane, which means are adapted for implementing a method as claimed in any one of claims 1 to 12.

**FIG.1**

**FIG.2**

**FIG.3**

## FIG.4

300

```
┌─────────┐
│   304   │
└─────────┘
     │
     ▼
┌─────────┐
│   306   │
└─────────┘
     │
     ▼
┌─────────┐
│   308   │
└─────────┘
     │
     ▼
┌─────────┐
│   310   │
└─────────┘
     │
     ▼
┌─────────┐
│   312   │
└─────────┘
```

## FIG.5

300

314

```
┌─────────┐
│   316   │
└─────────┘
     │
     ▼
┌─────────┐
│   318   │
└─────────┘
     │
     ▼
┌─────────┐
│   320   │
└─────────┘
     │
     ▼
┌─────────┐
│   322   │
└─────────┘
     │
     ▼
┌─────────┐
│   324   │
└─────────┘
```

326

```
┌─────────┐
│   328   │
└─────────┘
     │
     ▼
┌───────────────────────┐
│   330   ┌─────────┐    │
│         │   332   │    │
│         └─────────┘    │
└───────────────────────┘
```

## FIG.7

$F_{K,K'}(X_K)$

$X_K$

$F_{K,K'}(X_K)$

$X_{K'}$

# FIG.6

300

334

336    338

340

342

344

346    348

350    352

354

356

358

360

362    364

366

# FIG.8

## FIG.9

400

402

404

406

408

## FIG.10

408

410

412

414

400

## FIG.11

400

408

416

## FIG.12

420

422

424

426

428

430

432

434

440

442

444

## FIG.13

428

436

437

438

## FIG.14

EP 2 279 488 B1

450

400

452

454

456

460

462

464

466

FIG.15

53

53A

53B

53C

53D

53E

53F

FIG.16

43

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• EP 1413911 A1

**Littérature non-brevet citée dans la description**

• **YU Y. et al.** Medical image computing and computer-assisted intervention. *MICCAI,* 2007